(19) Europäisches Patentamt
European Patent Office
Office européen des brevets

(11) Publication number: 0 306 413 A1

# (12) EUROPEAN PATENT APPLICATION

(21) Application number: 88402219.5

(22) Date of filing: 02.09.88

(51) Int. Cl.4: A 01 N 43/653
A 01 N 43/60, A 01 N 43/84
//(A01N43/653,43:653),
(A01N43/60,43:653),
(A01N43/84,43:653)

(30) Priority: 03.09.87 JP 219252/87
05.11.87 JP 278380/87

(43) Date of publication of application:
08.03.89 Bulletin 89/10

(84) Designated Contracting States: DE FR GB IT

(71) Applicant: HOKKO CHEMICAL INDUSTRY CO., LTD
4-20, 4-chome, Nihonbashi-Hongoku-cho Chuo-ku
Tokyo (JP)

(72) Inventor: Hiramatsu, Motohiro
Konan Heights 101 816 Okada
Atsugi-shi Kanagawa-ken (JP)

Inatsugu, Hiromitsu
98-56 Ohtsuka
Hachioji-shi Tokyo (JP)

(74) Representative: Nony, Michel et al
Cabinet NONY & CIE 29, rue Cambacérès
F-75008 Paris (FR)

## (54) A synergistic fungicidal composition of agricultural and horticultural utilities, and methods for controlling fungal diseases on plants.

(57) There is now provided a new synergistic fungicidal composition of agricultural and horticultural utilities, which comprises (a) a fungicidal triazole derivative of a particular general formula as a first active ingredient, and (b) a second fungicidal compound selected from among the other fungicidal triazole derivatives, fungicidal imidazole derivatives, fungicidal morpholine derivatives and fungicidal piperazine derivatives as a second active ingredient, and this composition is highly effective to control a fungal disease of plants, especially a powdery mildew of plants caused by a resistant strain of a powdery-mildew fungus resistant to such a fungicidal triazole, imidazole, morpholine or piperazine derivative. There are further provided methods for controlling a fungal disease of plants, especially a powdery mildew of plants caused by said resistant strain of the powdery-mildew fungus, with using said synergistic fungicidal composition or using the two fungicidal compounds separately at a time interval.

EP 0 306 413 A1

## Description

# A SYNERGISTIC FUNGICIDAL COMPOSITION OF AGRICULTURAL AND HORTICULTURAL UTILITIES, AND METHODS FOR CONTROLLING FUNGAL DISEASES ON PLANTS.

## SUMMARY OF THE INVENTION

This invention relates to a synergistic fungicidal composition of agricultural and horticultural utilities which comprises (a) a fungicidal triazole derivative of a particular general formula as a first active ingredient, and (b) a second fungicidal compound selected from among the other fungicidal triazole derivatives, fungicidal imidazole derivatives, fungicidal morpholine derivatives and fungicidal piperazine derivatives as a second active ingredient, and which composition is highly effective to control a fungal disease of plants, especially a powdery mildew of plants caused by a resistant strain of a powdery-mildew-phytopathogenic fungus resistant to such a fungicidal triazole, imidazole, morpholine or piperazine derivative that principally acts as an inhibitor against the biosynthesis of ergosterol in the phytopathogenic fungi. This invention also relates to a method for controlling a fungal disease of plants, especially a powdery mildew of plants caused by said resistant strain of the powdery-mildew-phytopathogenic fungus, which method comprises applying said synergistic fungicidal composition of this invention to a plant which has been infected with the phytopathogenic fungus or is susceptible of being infected with said phytopathogenic fungus, with said fungicidal composition being prepared by mixing the first active ingredient compound with the second active ingredient compound together immediately just before the application of said fungicidal composition. This invention further relates to a method for controlling a fungal disease of plants, especially a powdery mildew of plants caused by said resistant strain of the powdery-mildew-phytopathogenic fungus, which method comprises applying in the "close interval" way the first active ingredient compound and the second active ingredient to a plant which has been infected with the phytopathogenic fungus or is susceptible of being infected with said phytopathogenic fungus, and in other words, in which method (a) the fungicidal triazole derivative of the above-mentioned particular general formula effective as the first active ingredient compound is first applied to the plant to be treated and, at an appropriate time interval after the application of the first active ingredient compound, (b) a second fungicidal compound selected from amongst the other fungicidal triazole derivatives, the fungicidal imidazole derivatives, the fungicidal morpholine derivatives and the fungicidal piperazine derivatives effective as the second active ingredient compound is secondly applied to the plant as once treated, or vice versa.

Thus, this invention is useful in the agricultural fields and horticultural fields particularly in that this invention provides a fungicidal agent highly effective to control a powdery mildew of plants, as well as an effective and practical method for controlling a powdery mildew of plants.

## BACKGROUND OF THE INVENTION

It is known that the fungicidal triazole compounds of the particular general formula (I) given hereinafter which is useful in this invention possess a fungicidal activity to control a powdery mildew and rust of vegetables, fruit-plants and cereal-plants, and scab of fruit plants as well as cercospora leaf spot of beet (see Japanese patent application first publication "Kokai" No. 58-65281, U.S. patent No. 4512989 and U.K. patent No. 2,109,371). It is also known that fungicidal triazole derivatives other than the abovementioned ones having the particular general formula (I), fungicidal imidazol derivatives, fungicidal morpholine derivatives and fungicidal piperazine derivatives are useful as foliar-spray agent to control various plant diseases of vegetables, fruit-plants and cereal-plants, as well as seed disinfectants. This is described in Japanese literatures "Handbook of Agricultural Chemicals, Edition of 1985" pp. 268-270, edited by Japon Plant Protection Association (January 3, 1986); and "Kumiai Conspectus of Agricultural Chemicals, Edition of 1987" pp. 629-630 and 633-634, edited by Agricultural Chemicals Department of Zennou Fertilizer, (August 1, 1986); as well as in English literatures "THE PESTICIDE MANUAL, Eighth Edition ", pp. 83, 328, 344, 460, 471-472, 638, 690-691, 813-814, 714, 827, 815, 831, 834-835, edited by The British Crop Protection Council, The Lavenham Press Limited (1987); and "Plant Cell Physiology", 27(2), pp. 367-371 (1986), etc. Futhermore, it is known that some synergistic fungicidal compositions containing one of the above-mentioned fungicidal compounds are useful as a fungicidal agent for agriculture and horticulture. It is further known that the fungicidal triazole derivatives, fungicidal imidazole derivatives, fungicidal morpholine derivatives and fungicidal piperazine derivatives which are useful in this invention can inhibit the biosynthesis of erogosterol in phytopathogenic fungi and thereby exhibit their fungicidal activity. The fungicidal compounds which have the activity inhibitory to the biosynthesis of ergosterol in the fungi are often referred to as an ergosterol-biosynthesis-inhibitor (sometime hereinafter abbreviated as "EBI" agent). Moreover, it is already known that two different fungicidal compounds having the ergosterol-biosynthesis-inhibiting activity, namely the EBI activity are applied in combination (Japanese patent application first publication "Kokai" No. 59-73054, EP patent application No. 106105, Japanese patent application first publication "Kokai" No. 62-192304 and EP patent application No. 235082; and the above-mentioned "THE PESTICIDE MANUAL, Eighth Edition", pp. 344, 472, 638, 814 and 827). Besides, it is known that a fungicidal composition containing both of flutriafol (one of the fungicidal triazole derivatives) and ethirimol (one of fungicidal pyrimidine derivatives) is more effective than the single

flutriafol to control a powdery mildew (Erysiphe graminis) on barley when used as the seed disinfectant {see the "In Crop Protection in Northern Britain" pp. 133-138, edited by Scottish Crop Research, Inst., U.K. (1987)}. Furthermore, as the synergistic fungicidal composition containing a fungicidal triazole derivative of the particular general formula (I) given hereinafter as one of the active ingredients in the composition, there are known, for example, a mixture of the compound of the general formula (I) and procymidone (Japanese patent application first publication "Kokai" No. 59-7105); a mixture of the compound of the general formula (I) and an antibiotic of polyoxin group (Japanese patent application first publication "Kokai" No. 59-7103); a mixture of the compound of the general formula (I) and iprodione or vinclozolin (Japanese patent application first publication "Kokai" No. 59-16803); a mixture of the compound of the general formula (I) and benomyl, thiophanate methyl, thiabendazole or MBC {namely, 2-(methoxycarbonyl-amino) benzimidazole} (Japanese patent application first publication "Kokai" No. 59-16808). The abovementioned general names are referred to in the above-mentioned Japanese literature "Handbook of Agricultural Chemicals".

The known methods for application of the agrochemicals to plants include such a method where two or more kinds of the active compounds are mixed together in situ in the fields, followed by immediately applying the resultant mixture to the plants, and such another method where two or more kinds of the active compounds are applied to plants at an interval of one day or several days, i.e., the method of so-called "close interval" application. However, the former method for application of the agrochemicals which comprises mixing the two or more active compounds together immediately just before their application is employed in the case where two or more active compounds are scarcely miscible with one another, or in the case where many kinds of fungal diseases occur concurrently and they cannot be controlled by treatment with a single active compound. The latter method of the "close interval" application of two or more active compounds is utilized in the case where the control effect by the application of the single active compound is insufficient.

However, it is not known yet to use such a mixture composed of a fungicidal triazole, imidazole, morpholine or piperazine derivative effective as the EBI agent, and of a triazole compound having the undermentioned general formula (I) which is similarly effective as the EBI agent. Furthermore, it is not known that a remarkedly improved control effect on such kind of powdery mildew, which resists to the EBI agent, can be obtained either by application of the mixture of the two or more active compounds as mixed immediately just before the application of the mixture, or by the "close interval" application of the two or more active compounds.

On the other hand, 1-(4-chlorophenoxy)-3,3-dimethyl-1-(1H-1,2,4-triazol-1-yl)-2-butanone (known under a general name "triadimefon" and hereinafter referred to as Compound A) is one of the fungicidal triazole derivatives and has been widely used as a fungicide against various powdery mildewes on plants. The Compound A can exert a noticeable effect to control powdery mildewes on vegetables, fruit-plants, cereal-plants and petal-plants even when it is applied at an extremely lower rate of application than the other conventional fungicidal compounds. In recent years, however, such resistant strains of powdery mildew fungi of cucumber, melon, rose, wheat, and the other crop-plants which are resistant to the Compound A have come out owing to the long-term continuous use of this Compound A, and in certain local areas, the powdery-mildew-controlling effects of the Compound A can have been reduced {as disclosed in Japanese literatures "Results of Agricultural Chemicals Test", pp. 49-59, edited by Zennou Agricultural Technical Center, (1986); and "The Phytopathology Society of Japan, Lecture Gist Collection", pp. 197-198 (1988)}. In addition, the resistant strains of powdery mildew fungi which are resistant to the Compound A can likewise have a cross resistance to the other fungicidal triazole derivatives, fungicidal imidazole derivatives, fungicidal morpholine derivatives, fungicidal piperazine derivatives, and also to a compound of the general formula (I) which belongs to the general, fungicidal triazole derivatives, since all these fungicidal compounds commonly act as the EBI agent. Therefore, the abovementioned fungicidal triazole derivatives, fungicidal imidazole derivatives, fungicidal morpholine derivatives and fungicidal piperazine derivatives have a remarkedly reduced effect to control the resistant strains of fungi of powdery mildew which are resistant to the Compound A, as compared to the sensitive strains of fungi of powdery mildew which are sensitive to the Compound A. Therefore, when the abovementioned fungicidal compounds of the EBI agent-type are used as the powdery mildew-controlling agent in order to achieve a practically useful result of controlling the powdery mildew diseases, these fungicidal compounds must be each used either at a larger rate of application or in the form of the more concentrated formulation or solution than when they are usually used for the control of the other fungal diseases. Or alternatively, the number of the application of the fungicidal compound must be multiplied, if the rate of application of the fungicidal compound is not increased. However, when the fungicidal compound of the EBI agent-type is applied to the plants in the abovementioned ways, the growth of crops-plants as treated can be inhibited and the size of leaves and fruits can be reduced due to the phytotoxicity of the fungicide, and the safety is also lowered. Besides, amongst the known fungicidal compounds which are usually applied singly, and amongst the known fungicidal compositions which contain two or more fungicidally active compounds, there cannot be found any fungicidal agent which is practically effective to control the resistant strains of fungi of the powdery mildew that are resistant to the fungicides of the EBI agent-type. Moreover, it can be presumed taht any new fungicidal triazole derivatives, fungicidal imidazol derivatives, fungicidal morpholine derivatives and fungicidal piperazine derivatives, which will be newly developed and provided in future, would not be highly effective to control the resistant strains of fungi of the powdery mildew which are resistant to the EBI agents, in common with the same EBI agent-type of conventional fungicides.

Still now, the fungicidal compounds of the EBI agent-type continue to be used as a particular efficacious agent to control a variety of powdery mildewes, in spite of the aforesaid disadvantageous problems involved.

This is because until now there is neither available nor developed in the practice any fungicidal agent or any fungicidal method that can effectively control the resistant strains of fungi of the powdery mildew which are resistant to the fungicides of the EBI agent-type. Accordingly, there is an urgent demand for a novel measure effective to control the powdery mildew, including those caused by the EBI agent-resistant strains and the EBI agent-sensitive strains of fungi of the powdery mildew.

DETAILED DESCRIPTION OF THE INVENTION

In these circumstances, an object of this invention is to provide a fungicidal agent which can completely control the various powdery mildewes of plants, especially the powdery mildew caused by such resistant strains of powdery mildew fungi that are resistant to the fungicides of the EBI agent-type. Another object of this invention is to provide a reliable method for controlling various powdery mildewes of plants, especially the powdery mildew caused by the aforesaid EBI agent-resistant strains of powdery mildew fungi.

We, the present inventors, have intensively made our researches in an attempt to provide a method which can control completely the EBI agent-resistant strains of powdery mildew fungi even when the fungicial agent as employed here is applied at a rate of application as low as the rate of application at which the fungicidal agent is normally applied to the infected plants to control completely the EBI agent-sensitive strains of powdery mildew fungi, and in our researches we have made many tests using such a Compound A-resistant strain of cucumber powdery mildew fungus (Sphaerotheca fuliginea), and a Compound A-resistant strain of maize smut fungus (Ustilago maydis) as the tested fungi. As a result, we have now found that the powdery mildew fungi, especially the EBI agent-resistant strains thereof can unexpectably be controlled completely or remarkably when treated by application in combination of (a) a fungicidal triazole derivative of the particular general formula (I) given hereinafter and (b) a second fungicidal compound selected from known fungicidal triazole derivatives {other than the triazoles of the general formula (I)}, known fungicidal imidazole derivatives, known morpholine derivatives and known fungicidal piperazine derivatives, although all these fungicidal derivatives commonly act as the EBI agent to exert their fungicidal activities through the same biological mechanism of inhibiting the ergosterol biosynthesis. Thus, it has now been found surprisingly that the combined application of (a) the fungicidal triazole derivative of the general formula (I) and of (b) a second fungicidal compound selected from the fungicidal triazole derivatives other than the fungicidal triazole derivative of the general formula (I), the fungicidal imidazole derivatives, the fungicidal morpholine derivatives and the fungicidal piperazine derivatives involves a synergism in controlling completely or remarkbly such EBI agent-resistant strains of powdery mildew fungi which cannot be usefully controlled by the single application of each of all the abovementioned fungicidal compounds. Accordingly, there can be provided a new synergistic fungicidal composition which comprises (a) a fungicidal triazole derivative of the general formula (I) as a first active ingredient and (b) a second fungicidal compound selected from the fungicidal triazole derivatives other than the fungicidal triazole derivative of the formula (I), the fungicidal imidazole derivatives, the fungicidal morpholine derivatives and the fungicidal piperazine derivatives as a second active ingredient and which may further comprise a solid or liquid carrier for the active ingredients, and this synergistic composition is highly effective to control such a powdery mildew of plants which has been caused by infection of the EBI agent-resistant strains of powdery mildew fungi, as well as such a powdery mildew which has been caused by infection of the EBI agent-sensitive strains of powdery mildew fungi.

The new synergistic fungicidal composition as mentioned above may be applied to the infected plants or the plants susceptible of being infected,immediately after it has been prepared by mixing (a) a fungicidal triazole derivative of the general formula (I) or a formulation containing said fungicidal triazole derivative of the formula (I) with (b) a second fungicidal compound selected from the other fungicidal triazole derivatives, the fungicidal imidazole derivatives, fungicidal morpholine derivatives and fungicidal piperazine derivatives or with a formulation containing said fungicidal compound just before the application of the synergistic composition so prepared.

As a further result of our researches, we have now also found that the EBI agent-resistant strains of powdery mildew fungi and the infections of said resistant strains of the fungi on the plants can be controlled completely or remarkably when they are treated by firstly applying (a) a fungicidal triazole derivative of the general forumula (I) to them, and after a time interval of one day to 7 days from the first application, secondly applying to the once treated plants or fungi (b) a second fungicidal compound selected from the other fungicidal triazole derivatives, the fungicidal imidazole derivatives, fungicidal morpholine derivatives and fungicidal piperazine derivatives, that is to say, by the technique of so-called "close interval" applications of the first mentioned fungicidal triazole compound and the second mentioned fungicidal compound, and further that the same outcome may be obtained even when the order of the application of the first compound and the application of the second compound is reversed.

In a first aspect, therefore, this invention provides a synergistic fungicidal composition of agricultural and horticultural utilities, comprising as the active ingredients a mixture of (a) a fungicidal triazole derivative represented by the general formula

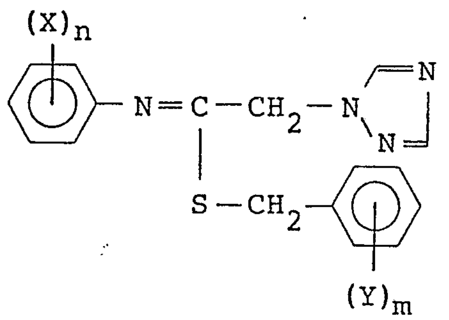

(I)

wherein X and Y are same or different and each denote a hydrogen atom or a halogen atom, and n and m are each an integer of 1 or 2, and (b) a second fungicidal compound selected from fungicidal triazole derivatives other than the triazole derivative of the formula (I), fungicidal imidazole derivatives, fungicidal morpholine derivatives and fungicidal piperazine derivatives.

The synergistic fungicidal composition according to the first aspect of this invention may contain further a conventional solid or liquid carrier or vehicle for the active ingredients, optionally along with other appropriate excipients.

Suitable ratio (by weight) of the first active ingredient compound to the second active ingredient compound present in the composition may be in a range of from 1 : 0.05 to 1 : 20, preferably in a range of 1 : 0.25 to 1 : 5. When the synergistic fungicidal composition of this invention further contains the carrier and/or the other appropriate excipient(s), the total amount of the first active ingredient compound and the second active ingredient compound may be in a range of 5.0% to 50.0%, based on the total weight of the composition.

Furthermore, typical preferred examples of the triazole derivatives of the general formula (I) used in the present invention will be set forth in Table 1 below. However, the scope of the present invention should not be limited to the use of these exemplary compounds.

Table 1

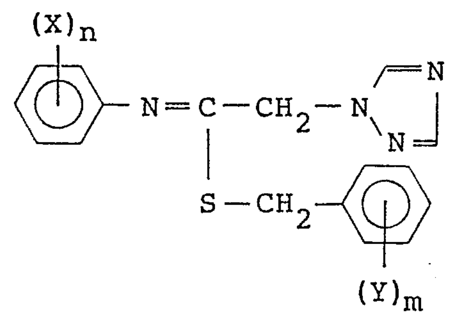

(I)

| Substituent (X,Y) / Compound No. | $(X)_n$ | $(Y)_m$ |
|---|---|---|
| 1 | 2,4 - $Cl_2$ | 4 - Cl |
| 2 | 2,4 - $Cl_2$ | 3,4 - $Cl_2$ |
| 3 | 2 - Cl, 4 - F | 4 - Cl |

Notes:

Compound Nos. given in Table 1 will be also referred to in Examples given hereinafter.

Chemical names of Compound No. 1, Compound No. 2 and Compound No.3 of Table 1 above are 4-chlorobenzyl N-(2,4-dichlorophenyl)-2-(1,2,4-triazole-1-yl)-ethane-thioimidate; 3,4-dichlorobenzyl N-(2,4-dichlorophenyl)-2-(1,2,4-triazole-1-yl)-ethane-thioimidate; and 4- chlorobenzyl N-(2-chloro-4-fluorophenyl)-2-(1,2,4-triazole-1-yl)-ethane-thioimidate, respectively.

The fungicidal triazole derivative of the general formula (I) may preferably be a compound of the following formula (Ia):-

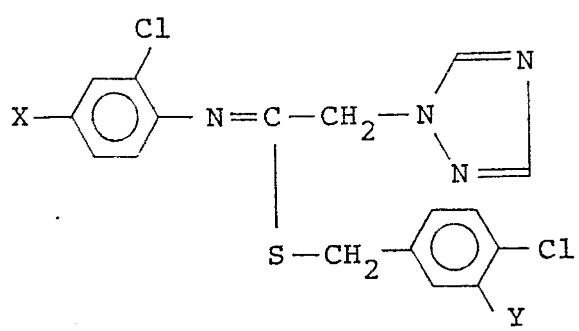

(Ia)

wherein X is a chlorine or fluorine atom and Y is a hydrogen atom or a chlorine atom.

Moreover, there will be hereinafter enumerated some typical examples of the fungicidal triazole derivatives, fungicidal imidazole derivatives, fungicidal morpholine derivatives and fungicidal piperazine derivatives which are usuable as the second active ingredient in the synergistic composition according to the first aspect of this invention. However, this invention is not limited to the use of these specific exemplary compounds, so that any compounds having the same function as the following exemplified compounds are also usable in this invention.

Incidentally, when the active ingredient compounds useful in this invention include their dextrorotatory and levorotatory isomers and their recemic mixtures, all of them are equally usable in this invention.

(1) Examples of the fungicidal triazole derivatives

(i) Compound A: 1-(4-Chlorophenoxy)-3,3-dimethyl-1-(1H-1,2,4-triazole-1-yl)-2-butanone of the formula

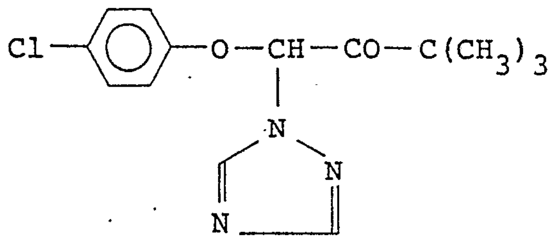

(ii) Compound B: 1-(4-Chlorophenoxy)-3,3-dimethyl-1-(1H-1,2,4-triazole-1-yl)-butane-2-ol of the formula

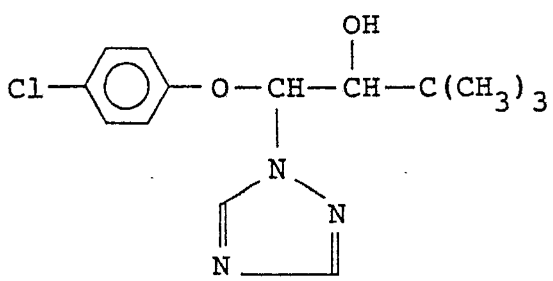

(iii) Compound C: All-rac-1-(biphenyl-4-yloxy)-3,3-dimethyl-1-(1H-1,2,4-triazole-1-yl)-butane-2-ol of the formula

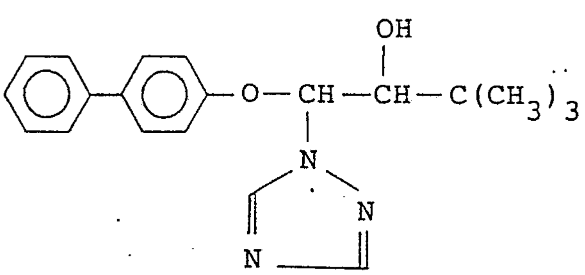

(iv) Compound D: (±)-1-{2-(2,4-Dichlorophenyl)-4-ethyl-1,3-dioxolan-2-ylmethyl}-1H-1,2,4-triazole of the formula

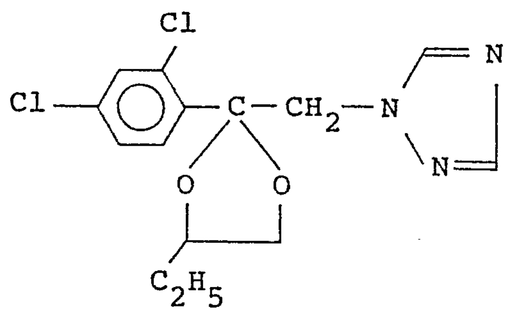

(v) Compound E: (E)-1-(2,4-Dichlorophenyl)-4,4-dimethyl-2-(1,2,4-triazole-1-yl)-1-pentene-3-ol of the formula

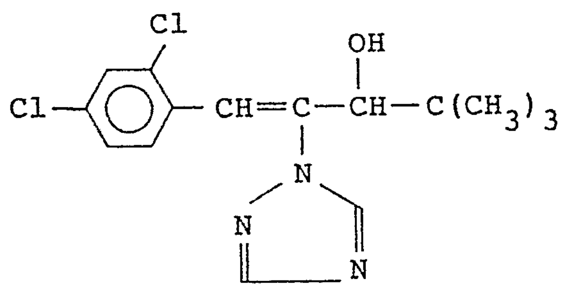

(vi) Compound F: (±)-1-{2-(2,4-Dichlorophenyl)-4-propyl-1,3-dioxolan-2-ylmethyl}-1H-1,2,4-triazole of the formula

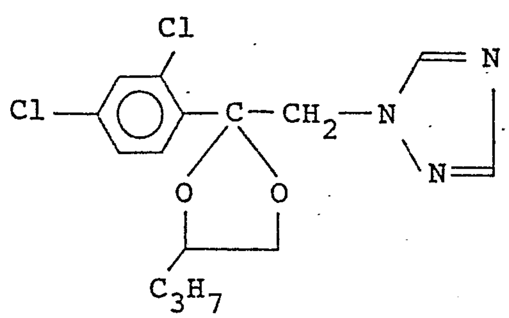

(vii) Compound G: 1-(2,4-Dichloro-β-propylphenetyl)-1H-1,2,4-triazole of the formula

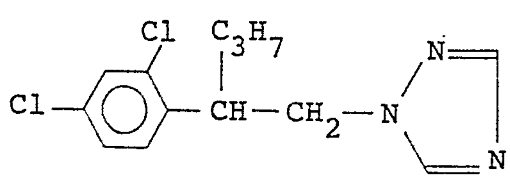

(viii) Compound H: (RS)-2-(2,4-Dichlorophenyl)-1-(1H-1,2,4-triazole-1-yl)-hexane-2-ol of the formula

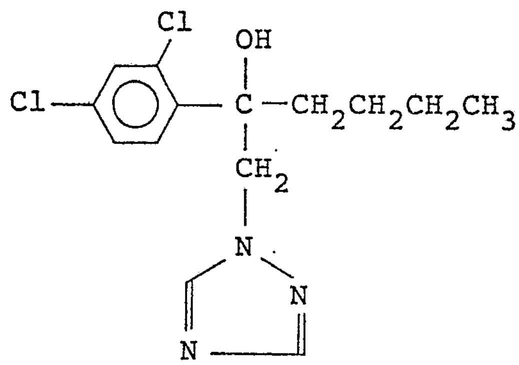

(2) Examples of the fungicidal imidazole derivatives

(ix) Compound I: Allyl 1-(2,4-dichlorophenyl)-2-imidazole-1-ylethyl ether of the formula

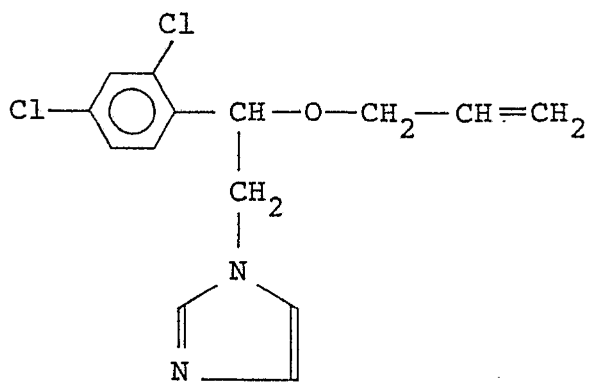

(x) Compound J: (E)-4-Chloro-α,α,α-trifluoro-N-(1-imidazole-1-yl-2-propoxyethylidene)-0-toluidine of the formula

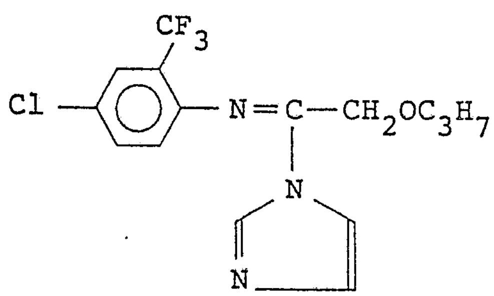

(xi) Compound K: N-Propyl-N-{2-(2,4,6-trichlorophenoxy)ethyl}imidazole-1-carboxyamide of the formula

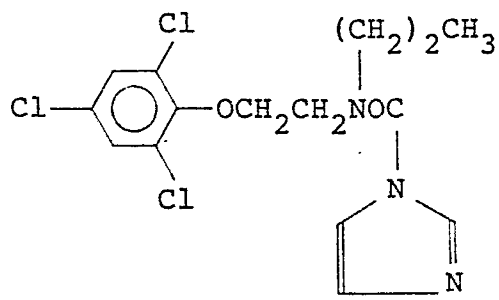

(3) Examples of the fungicidal morpholine derivatives

(xii) Compound L: 4-Cyclododecyl-2,6-dimethylmorpholine acetate of the formula

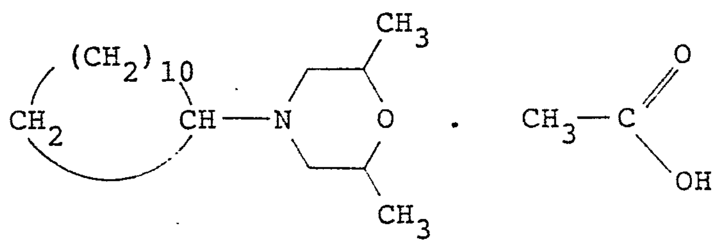

(xiii) Compound M: 2,6-Dimethyl-4-tridecylmorpholine of the formula

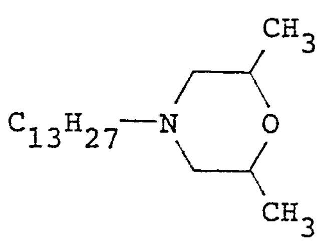

(4) Examples of the fungicidal piperazine derivatives

(xiv) Compound N: 1,1′-Piperazine-1,4-diyl-di-{N-(2,2,2-trichloroethyl)formamide} of the formula

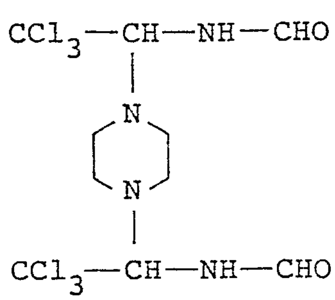

Particular embodiments of the first aspect of this invention, the synergistic fungicidal composition of this invention include the following compositions comprising:-

(1) A combination of Compound No. 1 with one of Compound A through Compound N;
(2) A combination of Compound No. 2 with one of Compound A through Compound N; and
(3) A combination of Compound No. 3 with one of Compound A through Compound N.

The composition of this invention which comprises Compound No. 1, Compound No. 2 or Compound No. 3 as the first active ingredient and Compound A as the second active ingredient is most preferred.

Meanwhile, with the synergistic fungicidal composition according to the first aspect of this invention, there can occasionally occur such a risk that the first active ingredient compound (a) and the second active ingredient compound (b) present together in the composition would degrade due to occasional interaction between them and lose their own fungicidal activities during the storage of the composition, depending on the natures of these particular active compounds incorporated, so that a certain kind of the first active ingredient compound is incompatible with a certain kind of the second active ingredient compound. Besides, it has been found through our experiences that the synergistic fungicidal composition of the first aspect of this invention is difficult in some cases to be formulated and stored in the form of a uniform mixture or can easily segragate during its storage, depending on the natures of the particular active compounds incorporated. In order to solve these problems due to the incompability between the first active ingredient compound and the second active ingredient compound which are used in the composition of the first aspect of this invention, we have found that either the first active ingredient compound, namely the fungicidal triazole derivative of the formula (I), or a previously prepared formulation containing singly said first active ingredient compound may be mixed with the second active ingredient compound, namely a second fungicidal compound selected from the fungicidal triazole derivatives {other than the compound of the triazole of the formula (I)}, the fungicidal imidazole derivatives, the fungicidal morpholine derivatives and the fungicidal piperazine derivatives, or a previously prepared formulation containing singly said second fungicidal compound to prepare a synergistic fungicidal composition according to the first aspect invention, immediately before the application of this synergistic composition, and that this mixing process may readily be conducted in situ in the fields of crop plants to be treated, with or without addition of a suitable carrier for the active ingredient compounds and with or without addition of other suitable excipients which are conventionally usuable in the art of agricultural pesticides.

In a second aspect of this invention, therefore, there is provided a method for controlling a fungal disease on plants, which comprises mixing a fungicidal triazole derivative represented by the general formula

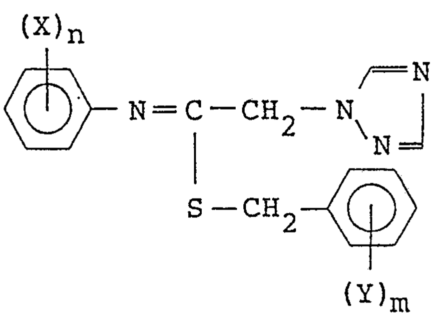

(I)

wherein X and Y are same or different and each denote a hydrogen atom or a halogen atom, and n and m are each an integer of 1 or 2, (b) with a second fungicidal compound selected from fungicidal triazole derivatives other than the fungicidal triazole derivative of the formula (I), fungicidal imidazole derivatives, fungicidal morpholine derivatives and fungicidal piperazine derivatives, and then immediately applying the resulting mixture to a plant which is infected with a phytopathogenic fungus of the fungual disease or is susceptible of being infected with said phytopathogenic fungus.

In particular, the method of the second aspect of this invention is remarkably effective to control such a powdery mildew of plants caused by the EBI agent-resistant strains of the powdery mildew fungi, in the same way as when the synergistic fungicidal composition of the first aspect of this invention is applied. In this method, the fungicidal triazole derivative of the formula (I), and the second fungicidal compound which are to be mixed with each other may independently be in the form of their separate formulations or compositions which have previously been prepared and each contain therein singly one of the fungicidal triazole derivative of the formula (I) and the second fungicidal compound, optionally together with a suitable carrier and with or without other suitable excipients.

In the method of the second aspect of this invention, appropriate examples of (a) the triazole derivative of the formula (I) and appropriate examples of (b) the second fungicidal compound selected are respectively the same as those mentioned for the first aspect of this invention. The triazole derivative of the formula (I) and the second fungicidal compound should be mixed together in such manner so as to afford a synergistic fungicidal composition which fall within the scope of the first aspect of this invention.

As described hereinbefore, the combination of the fungicidal triazole derivative of the formula (I) and the second fungicidal compound used in this invention are able to completely control the EBI agent-resistant

strains of the powdery mildew fungi, not only when they are applied concurrently as a mixture in a synergistic composition comprising them, but also when they are applied separately and successively at an appropriate time interval of 1 day to 7 days according to the technique of so-called "close interval" application.

In a third aspect, therefore, there is provided a method for controlling a fungal disease on plants, which comprises firstly applying (a) a fungicidal triazole derivative represented by the general formula

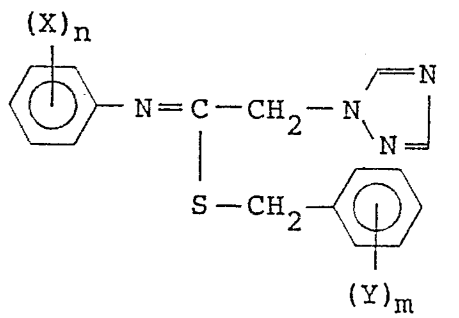

(I)

wherein X and Y are same or different and each denote a hydrogen atom or a halogen atom, and n and m are each an integer of 1 or 2, to a plant which is infected with a phytopathogenic fungus of the fungal disease or is susceptible of being infected with said phytopathogenic fungus, and then at a time interval of 1 day to 7 days from the first application of the triazole derivative of the formula (I), secondly applying to the once treated plant (b) a second fungicidal compound selected from the fungicidal triazole derivatives other than the teriazole derivative of the formula (I), the fungicidal imidazole derivatives, the fungicidal morpholine derivatives and the fungicidal piperazine derivatives, optionally with the order of the application of the trizaole derivative of the formula (I) and the application of the second fungicidal compound being reversed.

In this method of the third aspect of this invention, appropriate examples of the triazole derivative of the formula (I) and appropriate examples of the second fungicidal compound selected are respectively the same as those mentioned before for the first aspect of this invention. The triazole derivative of the formula (I) and the second fungicidal compound selected may independently be in the form of thier separate formulations or compositions which have previously been prepared and each contain therein singly one of the triazole derivative of the formula (I) and the second fungicidal compound selected.

In the first, second and third aspects of this invention, either the "concurrent" combined application or the "close interval" application of (a) the fungicidal triazole derivative of the formula (I) plus (b) the second fungicidal compound selected in accordance with this invention can bring about an unexpectable meritable effect in that the composition and the methods of this invention can control completely or remarkably the EBI agent-resistant strains of powdery mildew fungi, including a Compound A-resistant strain of cucumber powder mildew fungus (Sphaerotheca fuliginea) and a Compound A-resistant strain of maize smut fungus (Ustilago maydis), which cannot be usefully controlled by the single application of anyone of the triazole derivative of the formula (I) and the second fungicidal compound used in this invention. This unexpectable meritable effect can be obtained even when the "concurrent" combined application or the "close interval" application of the triazole compound of the formula (I) plus the second fungicidal compound selected is effected by applying each of these two kinds of the fungicidally active compounds at such a rate of application as low as the rate of the application at which one of them was usually applied to effectively control the EBI agent-sensitive strains of powdery mildew fungi.

It is considered that the above-mentioned meritable effect obtained in this invention should be attributable to the synergistic action of the above-mentioned two kinds of the first and second fungicidal compounds which are applied concurrently as a synergistic composition or by the technique of the "close interval" application, though the detail of the functional mechanism of the above-mentioned synergistic action are not elucidated so far.

Now, the synergistic fungicidal composition of the first aspect of this invention is described below in detail.

The fungicidal composition of the first aspect of this invention may be prepared by mixing together the first and second two active ingredient compounds, a carrier and optionally various excipient into a formulation, and it may be in the form of a wettable powder, an emulsifiable concentrate, a powder, granules, a flowable suspension concentrate or the like. Examples of the usable carrier in this invention include solid carriers such as clay, talc, bentonite, kaolin, diatomaceous earth, silica and sucrose; and liquid carriers such as benzene, xylene, toluene, kerosene, glycols (propylene glycol, propyleneglycol methyl ether, propyleneglycol ethyl ether, dipropyleneglycol methyl ether, ethyleneglycol methyl ether and the like), alcohols (methanol, ethanol, isopropanol, n-butanol and the like), ketones (acetone, methyl ethyl ketone, cyclohexanone and the like). The composition containing the active ingredient compounds and carrier may further contain a suitable surface active agent and other excipients such as a stabilizer, a spreader and the like in order to prepare such a fungicidal composition which can readily be applied. The weight ratio of the first active ingredient compound (a), namely the triazole derivative of the formula (I) to the second active ingredient compound (b), namely the

second fungicidal compound selected from the other triazole derivatives, the fungicidal imidazole derivative, fungicidal morpholine derivatives and fungicidal piperazine derivatives may be in a range of 1:0:05 to 1:20, preferably in a range of 1:0.25 to 1:5.

However, the weight ratio between the first and second active ingredient compounds can suitably vary in compliance with various conditions involved at the time of the real application of the composition.

If desired, the fungicidal composition of the first aspect of this invention, when applied, can further be mixed with another fungicide, an insecticide, a plant growth regulator, and/or nutrients for a plant, and the like.

Now, the fungicidal composition of the first aspect of this invention will be illustrated with reference to the following Examples. In the Examples, part and parts all are given by weight.

Example 1 (Wettable powder)

With 83 parts of clay were mixed 5 parts of Compound A specified hereinbefore, 5 parts of Compound No. 1 specified hereinbefore, 2 parts of white carbon, 3 parts of lauryl sulfate and 2 parts of calcium ligninsulfonate, and the resulting mixture was well ground to afford a wettable powder as a fungicidal composition.

Example 2 (Wettable powder)

With 83 parts of clay were mixed 5 parts of Compound B specified hereinbefore, 5 parts of Compound No. 2, 2 parts of white carbon, 3 parts of lauryl sulfate and 2 parts of sodium naphthalenesulfonate-formalin condensate, and the resulting mixture was well ground to give a wettable powder.

Example 3 (Wettable powder)

With 81 parts of clay were mixed 7 parts of Compound C, 5 parts of Compound No.3, 2 parts of white carbon, 3 parts of lauryl sulfate and 2 parts of calcium ligninsulfonate, and the resulting mixture was well ground to give a wettable powder.

Example 4 (Wettable powder)

With 87 parts of clay were mixed 1 part of Compound J, 5 parts of Compound No.3, 2 parts of white carbon, 3 parts of lauryl sulfate and 2 parts of calcium ligninsulfonate, and the resulting mixture was well ground to obtain a wettable powder.

Example 5 (Emulsifiable concentrate)

With 50 parts of xylol were mixed 15 parts of Compound I, 25 parts of Compound No. 1, 3 parts of calcium dodecylbenzenesulfonate and 7 parts of polyoxyethylene phenyl ether, thereby obtaining an emulsifiable concentrate as a fungicidal composition.

Example 6 (Dust)

With 88 parts of clay were mixed 0.5 part of Compound L, 0.5 part of Compound No. 3, 1 part of white carbon and 10 parts of talc, and the resulting mixture was sufficiently ground to obtain a dusting powder.

Example 7 (Wettable granules)

With 60 parts of clay were mixed 5 parts of the Compound M, 5 parts of Compound No. 2, 5 parts of white carbon and 10 parts of lauryl sulfate, and the resulting mixture was well ground into powder. Afterward, 15 parts of water was added thereto, and after mixing, the mixture was granulated by means of an extruding granulator. The granules were dried and screened (14 to 32 mesh) to obtain wettable granules.

Example 8 (Flowable suspension concentrate)

To 73 parts of water were added 2 parts of polyoxyethylene nonylphenyl ether and 5 parts of sodium ligninsulfonate, and they were stirred and dissolved into solution. Afterward, 5 parts of a finely ground Compound A and 5 parts of a finely ground Compound No. 1 were added into the solution, and 10 parts of a 2% aqueous xanthane gum solution was further added thereto, followed by stirring, to afford a flowable powder.

Example 9 (Wettable powder)

With 81 parts of clay were mixed 10 parts of Compound N, 2 parts of Compound No. 1, 2 parts of white carbon, 3 parts of lauryl sulfate and 2 parts of calcium ligninsulfonate, and the resulting mixture was well ground to produce a wettable powder.

The synergistic fungicidal composition of the first aspect of this invention is normally applied to the plant in the following ways. When the synergistic fungicidal composition takes the form of a wettable powder, an emulsifiable concentrate or a flowable suspension concentrate, it may be diluted with water to a 100-fold to 10,000-fold volume so as to prepare an aqueous solution or suspension containing the two fungicidal compounds at a total concentration of 5 to 1,000 ppm. Afterward, the thus diluted solution or suspension is applied by spraying to the areas of a plant infected with a fungal disease, and at this time the volume of the sprayed fungicidal solution or suspension may be in the range of 30 to 1,000 liters, usually 100 to 600 liters per 10 ares of the field of the plants to be treated.

When the synergistic fungicidal composition of this invention takes the form of an emulsifiable concentrate or a flowable suspension concentrate, it may also be directly applied as such in its original concentrated state without any dilution with water, or may be diluted with water to 50-fold volume or less to spray with low volume, mainly for the purpose of spraying in air. The spray operation of the synergistic fungicidal composition of the concentrated form may be carried out by use of a helicopter or the like, in such way that the sprayed volume of the concentrated fungicidal composition is in the range of 50 to 3,000 milliliters per 10 ares of the field of the plants to be treated.

In the case when the synergistic fungicidal composition of this invention is in the state of a powder or granules, this composition may be scattered on the foliage of plant, a ground surface or a water surface preferably at a rate of 2 to 5 kg (about 4 g to about 200 g in terms of the total amounts of the two active ingredients) per 10 ares. Whatever procedure mentioned above for application of the synergistic fungicidal composition of this invention is employed, the total rates of application of the first and second active ingredients may be generally in a range of 1.5 g to 200 g, preferably in a range of 1.5 g to 75 g per 10 ares of the field to control completely the EBI agent-resistant strains of powdery mildew fungi.

Further, the method according to the second aspect of this invention is described below in detail.

In this method, the fungicidal triazole compound of the formula (I) to be firstly applied may preliminarily be formulated into a formulation or composition containing this triazole compound alone but together with a suitable carrier and with or without suitable other excipient, before its application. The same applies to the second fungicidal compound selected from the fungicidal triazole derivatives (other than the triazole of the formula (I)), the fungicidal imidazole derivatives, the fungicidal morpholine derivatives and the fungicidal piperazine derivatives, which is to be secondly applied to the once treated plant. To prepare such formulation containing singly either the triazole compound of the formula (I) to be firstly applied or the second fungicidal compound to be secondly applied, either (a) the triazole compound of the formula (I) or (b) the second fungicidal compound selected from the fungicidal triazole derivatives, the fungicidal imidazole derivatives, the fungicidal morpholine derivatives and the fungicidal piperazine derivatives may be mixed with a carrier and optionally with various excipient agents which are conventionally used in the usual agricultural pesticides, and the resultant mixture may be prepared into the form of an emulsifiable concentrate, a wettable powder, a flowable suspension or the like. However, if the above-mentioned formulation containing singly the triazole compound of the formula (I) to be firstly applied, and/or the formulation containing singly the second fungicidal compound to be secondly applied is or are commercially available as such, it or they may be ready for use in the method of the second aspect of this invention. An example of such formulation containing a triazole compound of the formula (I) singly or the second fungicidal compound singly is illustrated below by way of wettable powder formulations:-

Example 10 (Wettable powders)

With 83 parts of clay were well mixed 10 parts of one compound of the formula (I),2 parts of white carbon, 3 parts of lauryl sulfate and 2 parts of calcium ligninsulfonate, and the resulting mixture was then ground throughoutly to give a first wettable powder.

On the other hand, with 75 parts of clay were mixed 10 parts of one fungicidal morpholine derivative (or 10 parts of anyone of the other fungicidal triazole derivatives, the fungicidal imidazole derivatives and the fungicidal piperazine derivatives), 10 parts of white carbon, 3 parts of lauryl sulfate and 2 parts of calcium ligninsulfonate, followed by well grinding the mixture, so that a second wettable powder was obtained.

The first wettable powder so prepared was well mixed with the second wettable powder in the crop plant field to form a uniform mixture. This mixture was immediately diluted with water to give a spraying aqueous suspension which was ready immediately to be sprayed to the crop plants in the field.

In the method of the second aspect of this invention, in general, the previously prepared formulation containing the triazole derivative of the formula (I) and the previously prepared formulation containing the second fungicidal compound are thus separately be prepared preliminarily, and then they are mixed together to form a synergistic fungicidal composition which is to be applied to the plants to be treated. Also, each of these two previously prepared formulations may be diluted with water to a total active ingredient concentration of 5 - 300 ppm. before their mixing process, followed by mixing the water-diluted formulations with each other to prepare a synergistic fungicidal composition in the form of a spraying solution which is ready for being sprayed to the plants to be treated. Alternatively, these previously prepared two formulations may be directly mixed together and the resulting mixture is then diluted with water to prepare a synergistic fungicidal composition in the form of spraying solution which is ready for being sprayed to the plants to be treated. The spraying solution so prepared by dilution with water may be applied to the foliage of the plant by means of a

suitable sprayer. If desired, a spreading agent may be added into the spraying solution so prepared, prior to its spraying. The above-mentioned previously prepared two separate formulation which are to be mixed together may include a combination of such two wettable powders, a combination of such two emulsifiable concentrates, a combination of such a wettable powder and emulsifiable concentrate, and a combination of another two different types of the formulations that the mixture formed therefrom are ready to be sprayed or scattered onto the plants with or without dilution with water.

It is necessary that the formulation containing the triazole of the formula (I) and the formulation containing the second fungicidal compound are mixed together in suitable proportions and at suitable concentrations of the active ingredients so that, after dilution with water, the resulting mixture ready to be applied to the plants contains the first and second two active ingredient compounds at the fungicidally effective concentrations and also at suitable weight ratio of the first fungicidal compound (namely the triazole of the formula (I)) to the second fungicidal compound in a range of 1:0.05 to 1:20, at which the synergism between these first and second fungicidal compounds as applied can be achieved in controlling completely the EBI agent-resistant strains of powdery mildew fungi.

Of course, it is possible that the fungicidal triazole compound of the formula (I) itself may be directly mixed with the second fungicidal compound itself together with a suitable liquid or solid carrier, and optionally with other suitable excipients, immediately before the resulting mixture so prepared is applied or sprayed to the plants.

Furthermore, the method of the third aspect of this invention is described in detail.

In this method, at first, (a) the first active ingredient compound, namely the triazole derivative of the formula (I) and (b) the second active ingredient compound selected according to this invention are separately formulated into a formulation or composition containing singly the first active ingredient compound and a formulation or composition containing singly the second active ingredient compound, respectively, in the same manner as described hereinbefore for the second aspect of this invention. These two formulations so prepared may separately be diluted with water to prepare the spraying solution or suspensions, which contain 5 - 150 ppm. or less of the triazole derivative of the formula (I) and 2 - 150 ppm. or less of the second fungicidal compound, respectively, and which are ready for application to the plants. The spraying solution or suspension so formed which contains the triazole derivative of the formula (I) is firstly applied to the plant, and at a time interval of one day to about one week from the first application, the spraying solution or suspension which contains the second fungicidal compound is applied to the once treated plants. The time interval between the first application and second application may be shortened or extended from one day or from about one weeks, if required If desired, the order of these applications may be reversed so that the second fungicidal compound is firstly applied and the triazole derivative of the formula (I) is secondly applied. It is proper that the rate of application of the triazole derivative of the formula (I) and the rate of application of the second fungicidal compound which have separately been applied through this process of the "close interval" application are in a range of 1.0 g/10 ares to 75 g/10 ares and in a range of 0.4 g/10 ares to 75 g/10 ares, respectively, and that the weight ratio of the quantity of the triazole derivative of the formula (I) to the quantity of the second fungicidal compound applied per a unit area is in the range of 1:0.05 to 1:20 by weight. However, in accordance with situations at the time of spraying, the concentration of the active ingredient in each formulation and the ratio between the rates of application of the first and second ingredient compounds applied can be suitably changed.

According to this invention, the following many meritable effects can be obtained:

As a first merit, the synergistic fungicidal composition of the first aspect of this invention and the antifungal methods of the second and third aspects of this invention are advantageously able to exhibit an excellent control effect against the EBI agent-resistant strains of cucumber powdery mildew fungus (Sphaerotheca fuliginea) and the EBI agent-resistant strains of melon powdery mildew fungus (Sphaerotheca fuliginea) which are frequently occurring in the fields of these crop plants in the recent years, as well as the EBI agent-resistant strains of maize smut fungus (Ustilago maydis), to the same level as in the control of the EBI agent-sensitive strains of these powdery mildew fungi, even when the active ingredient compounds used according to this invention are each applied at low rates of application to the plants to be treated.

As a second merit, the composition and the methods of this invention are additionally able to exert an excellent control effect also against the EBI agent-resistant strains of the following dieases:-

Wheat powdery mildew (Erysiphe graminis f. sp. tritici)
Wheat eyespot (Pseudocercosporella herpotrichoides)
Barley powdery mildew (Erysiphe graminis f. sp. hordei)
Barley net blotch (Pyrenophora teres)
Barley scald (Rhynchosporium secalis)
Apple scab (Venturia inaequalis)
Cucumber scab (Cladosporium cucumerinum)
Strawbery powdery mildew (Sphaerotheca macularis)
Rose powdery mildew (Sphaerotheca pannosa)

As a third merit, the composition and the methods of this invention are able to bring about the synergism in the fungicidal activities of the first and second active ingredient compounds used in association according to this invention, so that the necessary rates of application of these two active compounds can be reduced as compared to when the single application of each of the two active compounds is made to control a powdery

mildew. The synergistic composition of this invention can be applied before or after the fungal infection directly to the foliage of the plants to be treated, by means of a suitable spraying device in order to control effectively the plant diease in question.

For a fouth merit, as long as such active ingredient compounds which can be applied singly to the plants without involving any phytotoxicity thereto is employed in the synergistic composition of the first aspect of this invention or in the respective formulations as used in the methods of the second and third aspects of this invention, the composition and the methods of this invention do not bring about any objectionable phytotoxicity to crop plants such as apples, pears, grapes, cherries, Japanese apricots, peaches, persimmons, cucumbers, melons, watermelons, tomatoes, strawberries, green peppers, onions, tea, barley, wheat, beets, peanuts, roses, chrysanthemums and lawn grass.

As the fifth merit, the methods of the second and third aspects of this invention can make it feasible to utilize in combination such a triazole derivative of the formula (I) and such a second fugicidal compound (namely,the one selected from the other fungicidal triazole derivatives, the fungicidal imidazole derivatives, the fungicidal morpholine derivatives and the fungicidal piperazine derivatives) which normally are so highly incompatible with each other that a stable, fungicidal formulation containing both of these two active compounds together cannot be prepared by any conventional method of preparing the agricultural pesticides. For this, this invention does not need any special or troublesome method of preparing the fungicidal formulation.

This invention is now illustrated with reference to the following tests.

Test 1 Test for controlling cucumber powdery mildew caused by an EBI agent-resistant strain of the mildew fungus

Each of test fungicidal compounds, or two of them was or were dissolved in 30 ml of acetone and then diluted with 30 ml of water containing 60 ppm. of polyoxyethylene alkyl esters (as a surfactant) so as to prepare such different test solutions for spray which each contained the one test compound or the two test compounds as active ingredient(s) at predetermined different concentrations. Exceptionally, Compound N, or Compound N together with another test compound was dissolved in 1 ml of dimethylformamide and then diluted with 49 ml of water containing 0.1% of a surfactant, "Sorpol" 700H (a product of Toho Chemical Co., Japan), so as to prepare such different test solutions for spray which each contained Compound N or Compound N together with another test compound as active ingredient(s) in different concentrations.

Each of the test solutions so prepared was applied as spray to the foliage of cucumber plants (variety: Sagami Hanjiro) at young stage of 2.1 to 2.2 leaves which were cultivated in pots, by means of an automatic sprayer. After the spraying of the test solution, the cucumber plants were placed in air to dry the wetted foliage, and subsequently kept for 24 hours in a room at a constant temperature of 20°C and at a relative humidity of 90%.

After 24 hours from the spraying of the test solution, the treated foliage of cucumber plants was inoculated with spore suspension of a Compound A-resistant strain of cucumber powdery mildew fungus (Sphaerotheca fuliginea) or with of spore suspension of a Compound A-sensitive strain of the cucumber powdery mildew fungus (Sphaerotheca fuligines), at a rate of 1 ml of the spore suspension per pot where the plants were grown. In this way, the inoculation was made. The spore suspension used for this inoculation had been prepared by diluting with water a stored culture of the Compound A-resistant strain or the Compound A-sensitive strain of S. fuliginea so that the spores in the diltued culture were present at a concentration of 10 to 15 spores in the visible field of a microscope ( x 150).

After the inoculation, the cucumber plants were placed in a room at a constant temperature of 20°C and at a relative humidity of 100% for 24 hours, and then stored in a room at a constant temperature of 20°C and at a relative humidity of 90% until the estimation of the developement of powdery mildew was made.

At the 13 days after the fungal inoculation, the first and second leaves of the plants were assessed to estimate the disease severity using the under-mentioned scale index. Further, the (%) disease control was calculated from the disease severity according to the under-mentioned equations. The phytotoxicity to the plants so treated was also assessed.

The above tests were carried out in three replicates using one pot per plot for a given concentration of one test compound.

Scale Index

| | | |
|---|---|---|
| 0 | : | No disease developed. |
| 0.5 | : | One or two lesions of the infection per leaf was observed. |
| 1 | : | The total area of the infection lesions extended to less than 10% of the total leaf area. |
| 2 | : | The total area of the infection lesions extended to 10% to less than 20% of the total leaf area. |
| 3 | : | The total area of the infection lesions extended to 20% to less than 30% of the total leaf area. |
| 4 | : | " " 30% to less than 40% " " |
| 5 | : | " " 40% to less than 50% " " |
| 6 | : | " " 50% to less than 60% " " |
| 7 | : | " " 60% to less than 70% " " |
| 8 | : | " " 70% to less than 80% " " |
| 9 | : | " " 80% to less than 90% " " |
| 10 | : | " " 90% to 100% " " |

$$\text{Disease severity} = \frac{0 \times n_0 + 1 \times n_1 + 2 \times n_2 \; \ldots\ldots + 10 \times n_{10}}{10 \times N} \times 100$$

where:-
n = Number of assessed leaves alloted for each scale index
N = Total number of assessed leaves
($n_0 + n_1 + \ldots\ldots n_{10}$)

$$\% \text{ Disease Control} = \frac{CK - T}{CK} \times 100$$

where:-
CK = Disease severity of the untreatment plots
T = Disease severity of the treated plots

The test results obtaind are tabulated in Table 2 below.

Table 2-A

Effects of controlling powdery mildew (*Sphaerotheca fuliginea*) on cucumber

| Test Compound | Concentration of active ingredient(s) in the sprayed solution (ppm) | Rate of application of active ingredient(s) (g/10 a) | % Disease Control | | Phytotoxicity |
|---|---|---|---|---|---|
| | | | Resistant strain of *S. fuliginea* | Sensitive strain of *S. fuliginea* | |
| Plots for application of single test compound (Comparative tests) | | | | | |
| Compound A | 60 | 18 | 29 | 100 | Not observed |
| | 40 | 12 | 10 | 100 | " |
| | 30 | 9 | 7 | 100 | " |
| | 20 | 6 | 5 | 100 | " |
| Compound B | 40 | 12 | 41 | 100 | Not observed |
| | 20 | 6 | 30 | 100 | " |
| | 10 | 3 | 15 | 100 | " |
| Compound C | 40 | 12 | 60 | 100 | Not observed |
| | 20 | 6 | 33 | 100 | " |
| | 10 | 3 | 16 | 100 | " |
| Compound D | 40 | 12 | 62 | 100 | Stunt |
| | 20 | 6 | 38 | 100 | Not observed |
| | 10 | 3 | 13 | 85 | " |
| Compound E | 30 | 9 | 71 | 100 | Stunt |
| | 15 | 4.5 | 50 | 100 | Not observed |
| | 10 | 3 | 40 | 100 | " |
| | 5 | 1.5 | 25 | 100 | " |
| Compound F | 40 | 12 | 65 | 100 | Not observed |
| | 20 | 6 | 31 | 100 | " |
| | 10 | 3 | 8 | 94 | " |
| Compound G | 40 | 12 | 70 | 100 | Not observed |
| | 20 | 6 | 37 | 100 | " |
| | 10 | 3 | 14 | 100 | " |

Table 2-A (continued)

Effects of controlling powdery mildew (Sphaerotheca fuliginea) on cucumber

| Test Compound | Concentration of active ingredient(s) in the sprayed solution (ppm) | Rate of application of active ingredient(s) (g/10 a) | % Disease Control | | Phytotoxicity |
|---|---|---|---|---|---|
| | | | Resistant strain of *S. fuliginea* | Sensitive strain of *S. fuliginea* | |
| Plots for application of single test compound (Comparative tests) | | | | | |
| Compound H | 25 | 7.5 | 79 | 100 | Greening of leaf |
| | 12.5 | 3.8 | 65 | 100 | Not observed |
| | 5 | 1.5 | 41 | 100 | " " |
| | 2.5 | 0.75 | 28 | 100 | " " |
| Compound I | 40 | 12 | 48 | 100 | Not observed |
| | 20 | 6 | 25 | 100 | " " |
| | 10 | 3 | 10 | 100 | " " |
| Compound J | 30 | 9 | 75 | 100 | Not observed |
| | 15 | 4.5 | 50 | 100 | " " |
| | 10 | 3 | 41 | 100 | " " |
| | 5 | 1.5 | 23 | 100 | " " |
| Compound K | 60 | 18 | 79 | 100 | Not observed |
| | 40 | 12 | 36 | 100 | " " |
| | 30 | 9 | 30 | 100 | " " |
| | 20 | 6 | 23 | 86 | " " |
| Compound L | 40 | 12 | 35 | 85 | Not observed |
| | 20 | 6 | 20 | 67 | " " |
| | 10 | 3 | 10 | 30 | " " |
| Compound M | 40 | 12 | 48 | 79 | Not observed |
| | 20 | 6 | 25 | 58 | " " |
| | 10 | 3 | 12 | 25 | " " |
| Compound N | 120 | 36 | 41 | 100 | Not observed |
| | 100 | 30 | 31 | 100 | " " |
| | 60 | 18 | 18 | 99 | " " |
| | 50 | 15 | 10 | 95 | " " |

Table 2-A (continued)

Effects of controlling powdery mildew (Sphaerotheca fuliginea) on cucumber

| Test Compound | Concentration of active ingredient(s) in the sprayed solution (ppm) | Rate of application of active ingredient(s) (g/10 a) | % Disease Control | | Phytotoxicity |
|---|---|---|---|---|---|
| | | | Resistant strain of *S. fuliginea* | Sensitive strain of *S. fuliginea* | |
| Plots for application of single test compound (Comparative tests) | | | | | |
| Compound No. 1 | 120 | 36 | 85 | 100 | Not observed |
| | 60 | 18 | 71 | 100 | Not observed |
| | 40 | 12 | 60 | 100 | Not observed |
| | 30 | 9 | 45 | 100 | Not observed |
| | 20 | 6 | 31 | 100 | Not observed |
| | 10 | 3 | 15 | 100 | Not observed |
| Compound No. 2 | 120 | 36 | 81 | 100 | Not observed |
| | 60 | 18 | 70 | 100 | Not observed |
| | 40 | 12 | 57 | 100 | Not observed |
| | 30 | 9 | 40 | 100 | Not observed |
| | 20 | 6 | 28 | 100 | Not observed |
| | 10 | 3 | 13 | 100 | Not observed |
| Compound No. 3 | 120 | 36 | 83 | 100 | Not observed |
| | 60 | 18 | 71 | 100 | Not observed |
| | 40 | 12 | 55 | 100 | Not observed |
| | 30 | 9 | 42 | 100 | Not observed |
| | 20 | 6 | 30 | 100 | Not observed |
| | 10 | 3 | 14 | 100 | Not observed |

Table 2-B

Effects of controlling powdery mildew (*Sphaerotheca fuliginea*) on cucumber

| Test Compound | Concentration of active ingredient(s) in the sprayed solution (ppm) | Rate of application of active ingredient(s) (g/10 a) | % Disease Control | | Phytotoxicity |
|---|---|---|---|---|---|
| | | | Resistant strain of *S. fuliginea* | Sensitive strain of *S. fuliginea* | |
| Plots for application of two test compounds in combination (Tests according to this invention) | | | | | |
| Compound A +<br>Compound No. 1 | 40 + 20<br>20 + 10 | 12 + 6<br>6 + 3 | 100<br>100 | 100<br>100 | Not observed<br>Not observed |
| Compound A +<br>Compound No. 2 | 40 + 20<br>20 + 10 | 12 + 6<br>6 + 3 | 100<br>100 | 100<br>100 | Not observed<br>Not observed |
| Compound A +<br>Compound No. 3 | 40 + 20<br>20 + 10 | 12 + 6<br>6 + 3 | 100<br>100 | 100<br>100 | Not observed<br>Not observed |
| Compound B +<br>Compound No. 1 | 20 + 20<br>10 + 10 | 6 + 6<br>3 + 3 | 100<br>100 | 100<br>100 | Not observed<br>Not observed |
| Compound B +<br>Compound No. 2 | 20 + 20<br>10 + 10 | 6 + 6<br>3 + 3 | 100<br>100 | 100<br>100 | Not observed<br>Not observed |
| Compound B +<br>Compound No. 3 | 20 + 20<br>10 + 10 | 6 + 6<br>3 + 3 | 100<br>100 | 100<br>100 | Not observed<br>Not observed |
| Compound C +<br>Compound No. 1 | 20 + 20<br>10 + 10 | 6 + 6<br>3 + 3 | 100<br>100 | 100<br>100 | Not observed<br>Not observed |

Table 2-B (continued)

Effects of controlling powdery mildew (Sphaerotheca fuliginea) on cucumber

| Test Compound | Concentration of active ingredient(s) in the sprayed solution (ppm) | Rate of application of active ingredients(s) (g/10 a) | % Disease Control | | Phytotoxicity |
|---|---|---|---|---|---|
| | | | Resistant strain of *S. fuliginea* | Sensitive strain of *S. fuliginea* | |
| Plots for application of two test compounds in combination (Tests according to this invention) | | | | | |
| Compound C + Compound No. 2 | 20 + 20<br>10 + 10 | 6 + 6<br>3 + 3 | 100<br>100 | 100<br>100 | Not observed<br>Not observed |
| Compound C + Compound No. 3 | 20 + 20<br>10 + 10 | 6 + 6<br>3 + 3 | 100<br>100 | 100<br>100 | Not observed<br>Not observed |
| Compound D + Compound No. 1 | 20 + 20<br>10 + 10 | 6 + 6<br>3 + 3 | 100<br>98 | 100<br>100 | Not observed<br>Not observed |
| Compound D + Compound No. 2 | 20 + 20<br>10 + 10 | 6 + 6<br>3 + 3 | 100<br>97 | 100<br>100 | Not observed<br>Not observed |
| Compound D + Compound No. 3 | 20 + 20<br>10 + 10 | 6 + 6<br>3 + 3 | 100<br>98 | 100<br>100 | Not observed<br>Not observed |
| Compound E + Compound No. 1 | 10 + 20<br>5 + 10 | 3 + 6<br>1.5 + 3 | 100<br>99 | 100<br>100 | Not observed<br>Not observed |
| Compound E + Compound No. 2 | 10 + 20<br>5 + 10 | 3 + 6<br>1.5 + 3 | 100<br>97 | 100<br>100 | Not observed<br>Not observed |

Table 2-B (continued)

Effects of controlling powdery mildew (Sphaerotheca fuliginea) on cucumber

| Test Compound | Concentration of active ingredients(s) in the sprayed solution (ppm) | Rate of application of active ingredient(s) (g/10 a) | % Disease Control | | Phytotoxicity |
|---|---|---|---|---|---|
| | | | Resistant strain of S. fuliginea | Sensitive strain of S. fuligines | |
| Plots for application of two test compounds in combination (Tests according to this invention) | | | | | |
| Compound E +<br>Compound No. 3 | 10 + 20<br>5 + 10 | 3 + 6<br>1.5 + 3 | 100<br>97 | 100<br>100 | Not observed<br>Not observed |
| Compound F +<br>Compound No. 1 | 20 + 20<br>10 + 10 | 6 + 6<br>3 + 3 | 100<br>99 | 100<br>100 | Not observed<br>Not observed |
| Compound F +<br>Compound No. 2 | 20 + 20<br>10 + 10 | 6 + 6<br>3 + 3 | 100<br>99 | 100<br>100 | Not observed<br>Not observed |
| Compound F +<br>Compound No. 3 | 20 + 20<br>10 + 10 | 6 + 6<br>3 + 3 | 100<br>98 | 100<br>100 | Not observed<br>Not observed |
| Compound G +<br>Compound No. 1 | 20 + 20<br>10 + 10 | 6 + 6<br>3 + 3 | 100<br>98 | 100<br>100 | Not observed<br>Not observed |
| Compound G +<br>Compound No. 2 | 20 + 20<br>10 + 10 | 6 + 6<br>3 + 3 | 100<br>97 | 100<br>100 | Not observed<br>Not observed |
| Compound G +<br>Compound No. 3 | 20 + 20<br>10 + 10 | 6 + 6<br>3 + 3 | 100<br>98 | 100<br>100 | Not observed<br>Not observed |

Table 2-B (continued)

Effects of controlling powdery mildew (Sphaerotheca fuliginea) on cucumber

| Test Compound | Concentration of active ingredient(s) in the sprayed solution (ppm) | Rate of application of active ingredient(s) (g/10 a) | % Disease Control | | Phytotoxicity |
|---|---|---|---|---|---|
| | | | Resistant strain of S. fuliginea | Sensitive strain of S. fuliginea | |
| Plots for application of two test compounds in combination (Tests according to this invention) | | | | | |
| Compound H +<br>Compound No. 1 | 5 + 20<br>2.5 + 10 | 1.5 + 6<br>0.8 + 3 | 100<br>100 | 100<br>100 | Not observed<br>Not observed |
| Compound H +<br>Compound No. 2 | 5 + 20<br>2.5 + 10 | 1.5 + 6<br>0.8 + 3 | 100<br>100 | 100<br>100 | Not observed<br>Not observed |
| Compound H +<br>Compound No. 3 | 5 + 20<br>2.5 + 10 | 1.5 + 6<br>0.8 + 3 | 100<br>100 | 100<br>100 | Not observed<br>Not observed |
| Compound I +<br>Compound No. 1 | 20 + 20<br>10 + 10 | 6 + 6<br>3 + 3 | 100<br>100 | 100<br>100 | Not observed<br>Not observed |
| Compound I +<br>Compound No. 2 | 20 + 20<br>10 + 10 | 6 + 6<br>3 + 3 | 100<br>100 | 100<br>100 | Not observed<br>Not observed |
| Compound I +<br>Compound No. 3 | 20 + 20<br>10 + 10 | 6 + 6<br>3 + 3 | 100<br>100 | 100<br>100 | Not observed<br>Not observed |
| Compound J +<br>Compound No. 1 | 10 + 20<br>5 + 10 | 3 + 6<br>1.5 + 3 | 100<br>100 | 100<br>100 | Not observed<br>Not observed |

Table 2-B (continued)

Effects of controlling powdery mildew (Sphaerotheca fuliginea) on cucumber

| Test Compound | Concentration of active ingredient(s) in the sprayed solution (ppm) | Rate of application of active ingredient(s) (g/10 a) | % Disease Control | | Phytotoxicity |
|---|---|---|---|---|---|
| | | | Resistant strain of S. fuliginea | Sensitive strain of S. fuliginea | |
| Plots for application of two test compounds in combination (Tests according to this invention) | | | | | |
| Compound J + Compound No. 2 | 10 + 20<br>5 + 10 | 3 + 6<br>1.5 + 3 | 100<br>100 | 100<br>100 | Not observed<br>Not observed |
| Compound J + Compound No. 3 | 10 + 20<br>5 + 10 | 3 + 6<br>1.5 + 3 | 100<br>100 | 100<br>100 | Not observed<br>Not observed |
| Compound K + Compound No. 1 | 40 + 20<br>20 + 10 | 12 + 6<br>6 + 3 | 100<br>100 | 100<br>100 | Not observed<br>Not observed |
| Compound K + Compound No. 2 | 40 + 20<br>20 + 10 | 12 + 6<br>6 + 3 | 100<br>100 | 100<br>100 | Not observed<br>Not observed |
| Compound K + Compound No. 3 | 40 + 20<br>20 + 10 | 12 + 6<br>6 + 3 | 100<br>100 | 100<br>100 | Not observed<br>Not observed |
| Compound L + Compound No. 1 | 20 + 20<br>10 + 10 | 6 + 6<br>3 + 3 | 100<br>98 | 100<br>100 | Not observed<br>Not observed |
| Compound L + Compound No. 2 | 20 + 20<br>10 + 10 | 6 + 6<br>3 + 3 | 100<br>99 | 100<br>100 | Not observed<br>Not observed |

Table 2-B (continued)

Effects of controlling powdery mildew (Sphaerotheca fuliginea) on cucumber

| Test Compound | Concentration of active ingredient(s) in the sprayed solution (ppm) | Rate of application of active ingredient(s) (g/10 a) | % Disease Control | | Phytotoxicity |
|---|---|---|---|---|---|
| | | | Resistant strain of *S. fuliginea* | Sensitive strain of *S. fuliginea* | |
| Plots for application of two test compounds in combination (Tests according to this invention) | | | | | |
| Compound L +<br>Compound No. 3 | 20 + 20<br>10 + 10 | 6 + 6<br>3 + 3 | 100<br>99 | 100<br>100 | Not observed<br>Not observed |
| Compound M +<br>Compound No. 1 | 20 + 20<br>10 + 10 | 6 + 6<br>3 + 3 | 100<br>99 | 100<br>100 | Not observed<br>Not observed |
| Compound M +<br>Compound No. 2 | 20 + 20<br>10 + 10 | 6 + 6<br>3 + 3 | 100<br>98 | 100<br>100 | Not observed<br>Not observed |
| Compound M +<br>Compound No. 3 | 20 + 20<br>10 + 10 | 6 + 6<br>3 + 3 | 100<br>99 | 100<br>100 | Not observed<br>Not observed |
| Compound N +<br>Compound No. 1 | 100 + 20<br>50 + 10 | 30 + 6<br>15 + 3 | 100<br>99 | 100<br>100 | Not observed<br>Not observed |
| Compound N +<br>Compound No. 2 | 100 + 20<br>50 + 10 | 30 + 6<br>15 + 3 | 100<br>99 | 100<br>100 | Not observed<br>Not observed |
| Compound N +<br>Compound No. 3 | 100 + 20<br>50 + 10 | 30 + 6<br>15 + 3 | 100<br>100 | 100<br>100 | Not observed<br>Not observed |

Table 2-B (Continued)

Effects of controlling powdery mildew (Sphaerotheca fuliginea) on cucumber

| Test Compound | Concentration of active ingredient(s) in the sprayed solution (ppm) | Rate of application of active ingredient(s) (g/10 a) | % Disease Control | | Phytotoxicity |
|---|---|---|---|---|---|
| | | | Resistant strain of *S. fuliginea* | Sensitive strain of *S. fuliginea* | |
| Chinomethionate (Referential) | 100<br>25 | 30<br>7.5 | 90<br>51 | 97<br>59 | Not observed<br>Not observed |
| Untreated plots | - | | 0<br>(100) | 0<br>(100) | - |

Notes for Tables 2-A and 2-B:-

1) "Chinomethionate" used in the Referential plots is a commercially available fungicidal agent containing S,S-6-methylquinoxaline-2,3-diyl dithiocarbonate as active ingredient.

2) The numerical figures given in the brackets in the above tables represent the disease severity in the untreatment.

From the fungicidal data of Table 2-A and Table 2-B, it is evident that when the mixture of the fungicidal derivative of the formula (I) and the second fungicidal compound as selected in accordance with this invention is compared with each single component fungicidal compound in such a way that the fungicidal data for each component fungicidal compound of the mixtures as applied separately at such a rate equal to that applied via said mixture is compared to the fungicidal data as obtained at the total rates of application of the two fungicidal compounds applied together via the mixtures, the combined application or use of the fungicidal triazole derivative of the formula (I) plus the second fungicidal compounds as selected exhibits a fungicidal effect which is significantly greater than the mere total of the fungicidal effects obtained from the single use of the individual components and which should be deemed as having attained the synergism.

Test 2 Test for inhibition of growth of sporidia of a Compound A-resistant strain of maize smut fungus (Ustilago maydis) (in vitro test)

A potato-dextrose (PD) liquid medium was used for the culture medium. An ethanolic solution containing one test fungicidal compound or two test fungicidal compounds was added into the prepared PD culture medium so as to prepare different incubation media which separately contained the single test compound or the two test compounds in combination as the active ingredient(s) at predetermined different concentrations.

The incubation media containing the test compound(s) were separately inoculated with sporidia of such a Compound A-resistant strain of maize smut fungus (Ustilago maydis) which had been obtained by selection of UV rays - irradiated sporidia in the medium. The inoculated incubation media each contained the sporidium of said U. maydis resistant strain at a concentration of $5 \times 10^4$ cells per ml at the initial time. The inoculated media were separately shake-incubated at 26°C for 15 hours. After completion of the shake-incubation, the number of the sporidium as propagated was measured with haemacytometer. From the calculated number of the sporidium after the propagation was evaluated a found value of such a concentration of the tested compound which was required to make 50% inhibition of the propagation of the sporidium, namely the $ED_{50}$ value of the test compound which was 50% inhibitory to the sporidum propagation.

The index of synergism obtained by combined use of the two active test compounds was evaluated according to a known C. P. Carpenter's method (see the "Agricultural and Food Chemistry" Vol. 9, No. I, page 34 (1961)).

The index of synergism was evaluated according to the following equations:-

$$\text{Predicted value of } ED_{50} = \frac{1}{\dfrac{P_1}{ED_{50.1}} + \dfrac{P_2}{ED_{50.2}}}$$

wherein $P_1$ and $P_2$ mean the proportion of the first test compound and the proportion of second test compound present in combination in the incubation medium, respectively,and wherein $ED_{50.1}$ and $ED_{50.2}$ mean respectively the $ED_{50}$ value as evaluated for the same proportion of the first test compound singly used and the $ED_{50}$ value as evaluated for the same proportion of the second test compound singly used.

Further, the index of synergism was calculated by the following equation:

$$\text{Index of synergism} = \frac{(\text{Predicted value of } ED_{50})}{(\text{Found value of } ED_{50})}$$

When the calculated value of the index of synergism took a value of not less than 2.0, it was judged that the synergistic effect was achieved through the combined use of the two test compounds used.

The test results obtained are summarized in Table 3 below.

Table 3-A

Effects on the inhibition of growth of sporidia of *Ustilago maydis* resistant strain

| Test Compound | Mixed ratio (by weight) of two tested compounds in combination | $ED_{50}$ Value (ppm) | Index of synergism |
|---|---|---|---|
| Plots for application of single test compound (Comparative tests) | | | |
| Compound A | - | 25 (1.6) | - |
| Compound B | - | 11 (0.8) | - |
| Compound C | - | 16 (1.4) | - |
| Compound I | - | 3.2(0.5) | - |
| Compound J | - | 2.5(0.2) | - |
| Compound L | - | 5.5(1.1) | - |
| Compound M | - | 4.2(0.7) | - |
| Compound No. 1 | - | 1.1(0.1) | - |

Table 3-B

Effects on the inhibition of growth of sporidia of Ustilago maydis resistant strain

| Test Compound | Mixed ratio (by weight) of two tested compounds in combination | $ED_{50}$ value (ppm) | Index of synergism |
|---|---|---|---|
| Plots for application of two test compounds in combination (Tests according to this invention) | | | |
| Compound A + Compound No. 1 | 0.91 : 0.09 | 3.0 | 2.8 |
| Compound B + Compound No. 1 | 0.91 : 0.09 | 2.9 | 2.1 |
| Compound C + Compound No. 1 | 0.91 : 0.09 | 2.9 | 2.5 |
| Compound I + Compound No. 1 | 0.67 : 0.33 | 1.4 | 2.2 |
| Compound J + Compound No. 1 | 0.67 : 0.33 | 0.8 | 2.1 |
| Compound L + Compound No. 1 | 0.83 : 0.17 | 1.2 | 2.7 |
| Compound M + Compound No. 1 | 0.83 : 0.17 | 1.1 | 2.5 |

Notes for Tables 3-A and 3-B:-

1) The numerical figures given in the brackets in the above tables indicate the $ED_{50}$ value of the test compound to the wild type of Ustilago maydis.

Test 3 Test for controlling cucumber powdery mildew caused by an EBI agent-resistant strain of cucumber powdery mildew fungus, by "close interval" application of two fungicidal compounds according to the third aspect of this invention.

Each of the test fungicidal compounds was formulated into wettable powders in the same manner as described in Example 10, and the wettable powder was dissolved in water containing 30 ppm of polyoxyethylene alkyl ethers as a surfactant so as to prepare different test solutions for spray which separately contained the test fungicidal compound at predetermined different concentrations.

The test solution for spray containing a test fungicidal compound to be firstly applied was sprayed onto the foliage of cucumber plants (variety: Sagami Hanjiro) at a stage of 2.3 to 2.4 leaves which were cultivated in pots, by means of an automatic sprayer, so as to give the rates of application of the active ingredient compound as indicated in Table 4 shown hereinafter. At a time interval of 1 day or 7 days after this first application, the test solution for spray containing a test fungicidal compound to be secondly applied was sprayed onto the foliage of the once treated cucumber plants. After each application of the test solutions for spray, the treated cucumber plants were stored in a room at a constant temperature of 20° C. For the comparative tests, the one and same fungicidal compound was applied twice through the first and second separate applications of the test solution for spray to the same cucumber plants.

For a first series of the tests according to the third aspect of this invention, a test fungicidal compound which was selected as the second fungicidal compound from the fungicidal triazole derivatives other than the triazoles of the formula (I), the fungicidal imidazole derivatives, the fungicidal morpholine derivatives and the fungicidal piperazine derivatives as mentioned hereinbefore was firstly applied, and then at a time interval of 1 day to or 7 days, a test fungicidal compound which was chosen from the fungicidal triazole derivatives of the formula (I) was secondly applied. On the other hand, in a second series of the tests according to the third aspect of this invention, a test fungicidal compound which was chosen from the triazole derivatives of the formula (I) was firstly applied, and then at a time interval of 1 day or 7 days, a second fungicidal compound as selected was secondly applied as the test fungicidal compound.

After the second application of the test compound as then used, the treated cucumber plants were stored in the room at a constant temperature of 20° C, and 1 day after the second application of the test compound, the plants were inoculated with spore suspension of a Compound A-resistant strain of cucumber powdery mildew fungus (Sphaerotheca fuliginea) or spore suspension of a Compound A-sensitive strain of cucumber powdery mildew fungus (Sphaerotheca fuliginea) at a rate of 1 ml of the spore suspension per pot where the plants were grown. The spore suspension used for this inoculation had been prepared by diluting with water a stored culture of the Compound A-resistant strain or the Compound A-sensitive strain of S. fuliginea so that the spores in the diluted culture were present at a concentration of 20 to 30 spores in the visible field of a microscope ( x 150).

After this fungal inoculation, the inoculated cucumber plants were placed for 24 hours in a room at a constant temperature of 20° C and at a relative humidity of 100% and then stored in the room at a constant temperature of 20° C and at a relative humidity of 90% until the estimation of the development of the powdery mildew disease was made.

The development of the fungal disease was carried out in the same manner as in the above Test 1 and the disease severity was evaluated in the same scale index as given in Test 1. The tests were conducted in three replicates using one pot per one plot for a given concentration of one test compound. The test results obtained are tabulated in Table 4 below.

Table 4-A

Effects of controlling powdery mildew (Sphaerotheca fuliginea) on cucumber

| Test Compound | | Concentration of active ingredient(s) in the sprayed solution (ppm) | | Rate of application of active ingredient(s) (g/10 a) | | Time interval (days) between the first and second application | % Disease Control | | Phytotoxicity |
|---|---|---|---|---|---|---|---|---|---|
| At first application | At second application | At first application | At second application | At first application | At second application | | Resistant strain of S. fuliginea | Sensitive strain of S. fuliginea | |
| Plots for application of the same test compound at different times (Comparative tests) | | | | | | | | | |
| Compound A | Compound A | 90<br>50 | 90<br>50 | 27<br>15 | 27<br>15 | 7<br>7 | 43<br>26 | 100<br>100 | Stunt<br>Dwarfing of leaf |
| | | 90<br>25 | 90<br>25 | 27<br>7.5 | 27<br>7.5 | 1<br>1 | 60<br>15 | 100<br>100 | Stunt<br>Not observed |
| Compound B | Compound B | 20<br>10 | 20<br>10 | 6<br>3 | 6<br>3 | 7<br>1 | 38<br>17 | 100<br>100 | Not observed<br>Not observed |
| Compound C | Compound C | 20<br>10 | 20<br>10 | 6<br>3 | 6<br>3 | 7<br>1 | 39<br>19 | 100<br>100 | Not observed<br>Not observed |
| Compound E | Compound E | 10<br>5 | 10<br>5 | 3<br>1.5 | 3<br>1.5 | 7<br>1 | 40<br>26 | 100<br>100 | Not observed<br>Not observed |
| Compound G | Compound G | 20<br>10 | 20<br>10 | 6<br>3 | 6<br>3 | 7<br>1 | 39<br>17 | 100<br>100 | Not observed<br>Not observed |
| Compound H | Compound H | 4<br>2 | 4<br>2 | 1.2<br>0.6 | 1.2<br>0.6 | 7<br>1 | 43<br>21 | 100<br>100 | Not observed<br>Not observed |
| Compound I | Compound I | 20<br>10 | 20<br>10 | 6<br>3 | 6<br>3 | 7<br>1 | 28<br>12 | 100<br>100 | Not observed<br>Not observed |
| Compound J | Compound J | 10<br>5 | 10<br>5 | 3<br>1.5 | 3<br>1.5 | 7<br>1 | 41<br>24 | 100<br>100 | Not observed<br>Not observed |

Table 4-A (continued)

Effects of controlling powdery wildew (Sphaerotheca fuliginea) on cucumber

| Test Compound | | Concentration of active ingredient(s) in the sprayed solution (ppm) | | Rate of application of active ingredient(s) (g/10 a) | | Time interval (days) between the first and second application | % Disease Control | | Phytotoxicity |
|---|---|---|---|---|---|---|---|---|---|
| At first application | At second application | At first application | At second application | At first application | At second application | | Resistant strain of S. fuliginea | Sensitive strain of S. fuliginea | |
| Plots for application of the same test compound at different times (Comparative tests) | | | | | | | | | |
| Compound K | Compound K | 40 | 40 | 12 | 12 | 7 | 36 | 100 | Not observed |
| | | 20 | 20 | 6 | 6 | 1 | 24 | 100 | Not observed |
| Compound L | Compound L | 20 | 20 | 6 | 6 | 7 | 31 | 70 | Not observed |
| | | 10 | 10 | 3 | 3 | 1 | 20 | 48 | Not observed |
| Compound M | Compound M | 20 | 20 | 6 | 6 | 7 | 39 | 69 | Not observed |
| | | 10 | 10 | 3 | 3 | 1 | 22 | 43 | Not observed |
| Compound N | Compound N | 100 | 100 | 30 | 30 | 7 | 39 | 100 | Not observed |
| | | 50 | 50 | 15 | 15 | 1 | 25 | 100 | Not observed |
| Compound No. 1 | Compound No. 1 | 90 | 90 | 27 | 27 | 7 | 65 | 100 | Not observed |
| | | 40 | 40 | 12 | 12 | 7 | 39 | 100 | Not observed |
| | | 90 | 90 | 27 | 27 | 1 | 84 | 100 | Not observed |
| | | 20 | 20 | 6 | 6 | 1 | 31 | 100 | Not observed |
| | | 5 | 5 | 1.5 | 1.5 | 1 | 9 | 100 | Not observed |
| Compound No. 2 | Compound No. 2 | 90 | 90 | 27 | 27 | 7 | 61 | 100 | Not observed |
| | | 40 | 40 | 12 | 12 | 7 | 38 | 100 | Not observed |
| | | 90 | 90 | 27 | 27 | 1 | 80 | 100 | Not observed |
| | | 20 | 20 | 6 | 6 | 1 | 30 | 100 | Not observed |
| | | 5 | 5 | 1.5 | 1.5 | 1 | 10 | 100 | Not observed |
| Compound No. 3 | Compound No. 3 | 90 | 90 | 27 | 27 | 7 | 63 | 100 | Not observed |
| | | 40 | 40 | 12 | 12 | 7 | 39 | 100 | Not observed |
| | | 90 | 90 | 27 | 27 | 1 | 81 | 100 | Not observed |
| | | 20 | 20 | 6 | 6 | 1 | 32 | 100 | Not observed |
| | | 5 | 5 | 1.5 | 1.5 | 1 | 11 | 100 | Not observed |

Table 4-B

Effects of controlling powdery mildew (Sphaerotheca fuliginea) on cucumber

| Test Compound | | Concentration of active ingredient(s) in the sprayed solution (ppm) | | Rate of application of active ingredient(s) (g/10 a) | | Time interval (days) between the first and second application | % Disease Control | | Phytotoxicity |
|---|---|---|---|---|---|---|---|---|---|
| At first application | At second application | At first application | At second application | At first application | At second application | | Resistant strain of S. fuliginea | Sensitive strain of S. fuliginea | |
| Plots for application of two different test compounds at different times (Tests according to this invention) | | | | | | | | | |
| Compound A | Compound No. 1 | 50<br>50<br>25 | 40<br>5<br>20 | 15<br>15<br>7.5 | 12<br>1.5<br>6 | 7<br>1<br>1 | 100<br>100<br>100 | 100<br>100<br>100 | Not observed<br>Not observed<br>Not observed |
| Compound A | Compound No. 2 | 50<br>50<br>25 | 40<br>5<br>20 | 15<br>15<br>7.5 | 12<br>1.5<br>6 | 7<br>1<br>1 | 100<br>100<br>100 | 100<br>100<br>100 | Not observed<br>Not observed<br>Not observed |
| Compound A | Compound No. 3 | 50<br>50<br>25 | 40<br>5<br>20 | 15<br>15<br>7.5 | 12<br>1.5<br>6 | 7<br>1<br>1 | 100<br>100<br>100 | 100<br>100<br>100 | Not observed<br>Not observed<br>Not observed |
| Compound B | Compound No. 1 | 20<br>10 | 40<br>20 | 6<br>3 | 12<br>6 | 7<br>1 | 100<br>100 | 100<br>100 | Not observed<br>Not observed |
| Compound B | Compound No. 2 | 20<br>10 | 40<br>20 | 6<br>3 | 12<br>6 | 7<br>1 | 100<br>100 | 100<br>100 | Not observed<br>Not observed |
| Compound B | Compound No. 3 | 20<br>10 | 40<br>20 | 6<br>3 | 12<br>6 | 7<br>1 | 100<br>100 | 100<br>100 | Not observed<br>Not observed |
| Compound C | Compound No. 1 | 20<br>10 | 40<br>20 | 6<br>3 | 12<br>6 | 7<br>1 | 100<br>100 | 100<br>100 | Not observed<br>Not observed |
| Compound C | Compound No. 2 | 20<br>10 | 40<br>20 | 6<br>3 | 12<br>6 | 7<br>1 | 100<br>100 | 100<br>100 | Not observed<br>Not observed |
| Compound C | Compound No. 3 | 20<br>10 | 40<br>20 | 6<br>3 | 12<br>6 | 7<br>1 | 100<br>100 | 100<br>100 | Not observed<br>Not observed |

Table 4-B (continued)

Effects of controlling powdery mildew (Sphaerotheca fuliginea) on cucumber

| Test Compound | | Concentration of active ingredient(s) in the sprayed solution (ppm) | | Rate of application of active ingredient(s) (g/10 a) | | Time interval (days) between the first and second application | % Disease Control | | Phytotoxicity |
|---|---|---|---|---|---|---|---|---|---|
| At first application | At second application | At first application | At second application | At first application | At second application | | Resistant strain of S. fuliginea | Sensitive strain of S. fuliginea | |
| Plots for application of two different test compounds at different times (Tests according to this invention) | | | | | | | | | |
| Compound E | Compound No. 1 | 10<br>5 | 40<br>20 | 3<br>1.5 | 12<br>6 | 7<br>1 | 99<br>99 | 100<br>100 | Not observed<br>Not observed |
| Compound E | Compound No. 2 | 10<br>5 | 40<br>20 | 3<br>1.5 | 12<br>6 | 7<br>1 | 99<br>98 | 100<br>100 | Not observed<br>Not observed |
| Compound E | Compound No. 3 | 10<br>5 | 40<br>20 | 3<br>1.5 | 12<br>6 | 7<br>1 | 98<br>99 | 100<br>100 | Not observed<br>Not observed |
| Compound G | Compound No. 1 | 20<br>10 | 40<br>20 | 6<br>3 | 12<br>6 | 7<br>1 | 100<br>100 | 100<br>100 | Not observed<br>Not observed |
| Compound G | Compound No. 2 | 20<br>10 | 40<br>20 | 6<br>3 | 12<br>6 | 7<br>1 | 100<br>100 | 100<br>100 | Not observed<br>Not observed |
| Compound G | Compound No. 3 | 20<br>10 | 40<br>20 | 6<br>3 | 12<br>6 | 7<br>1 | 100<br>100 | 100<br>100 | Not observed<br>Not observed |
| Compound H | Compound No. 1 | 4<br>2 | 40<br>40 | 1.2<br>0.6 | 12<br>12 | 7<br>1 | 100<br>100 | 100<br>100 | Not observed<br>Not observed |
| Compound H | Compound No. 2 | 4<br>2 | 40<br>40 | 1.2<br>0.6 | 12<br>12 | 7<br>1 | 100<br>100 | 100<br>100 | Not observed<br>Not observed |
| Compound H | Compound No. 3 | 4<br>2 | 40<br>40 | 1.2<br>0.6 | 12<br>12 | 7<br>1 | 100<br>100 | 100<br>100 | Not observed<br>Not observed |
| Compound I | Compound No. 1 | 20<br>10 | 40<br>20 | 6<br>3 | 12<br>6 | 7<br>1 | 100<br>100 | 100<br>100 | Not observed<br>Not observed |

Table 4-B (continued)

Effects of controlling powdery mildew (Sphaerotheca fuliginea) on cucumber

| Test Compound | | Concentration of active ingredient(s) in the sprayed solution (ppm) | | Rate of application of active ingredient(s) (g/10 a) | | Time interval (days) between the first and second application | % Disease Control | | Phytotoxicity |
|---|---|---|---|---|---|---|---|---|---|
| At first application | At second application | At first application | At second application | At first application | At second application | | Resistant strain of *S. fuliginea* | Sensitive strain of *S. fuliginea* | |
| Plots for application of two different test compounds at different times (Tests according to this invention) | | | | | | | | | |
| Compound I | Compound No. 2 | 20<br>10 | 40<br>20 | 6<br>3 | 12<br>6 | 7<br>1 | 100<br>100 | 100<br>100 | Not observed<br>Not observed |
| Compound I | Compound No. 3 | 20<br>10 | 40<br>20 | 6<br>3 | 12<br>6 | 7<br>1 | 100<br>100 | 100<br>100 | Not observed<br>Not observed |
| Compound J | Compound No. 1 | 10<br>5 | 40<br>20 | 3<br>1.5 | 12<br>6 | 7<br>1 | 100<br>100 | 100<br>100 | Not observed<br>Not observed |
| Compound J | Compound No. 2 | 10<br>5 | 40<br>20 | 3<br>1.5 | 12<br>6 | 7<br>1 | 100<br>100 | 100<br>100 | Not observed<br>Not observed |
| Compound J | Compound No. 3 | 10<br>5 | 40<br>20 | 3<br>1.5 | 12<br>6 | 7<br>1 | 100<br>100 | 100<br>100 | Not observed<br>Not observed |
| Compound K | Compound No. 1 | 40<br>20 | 40<br>20 | 12<br>6 | 12<br>6 | 7<br>1 | 100<br>100 | 100<br>100 | Not observed<br>Not observed |
| Compound K | Compound No. 2 | 40<br>20 | 40<br>20 | 12<br>6 | 12<br>6 | 7<br>1 | 100<br>100 | 100<br>100 | Not observed<br>Not observed |
| Compound K | Compound No. 3 | 40<br>20 | 40<br>20 | 12<br>6 | 12<br>6 | 7<br>1 | 100<br>100 | 100<br>100 | Not observed<br>Not observed |
| Compound L | Compound No. 1 | 20<br>20<br>10 | 40<br>5<br>20 | 6<br>6<br>3 | 12<br>1.5<br>6 | 7<br>1<br>1 | 100<br>100<br>100 | 100<br>100<br>100 | Not observed<br>Not observed<br>Not observed |

Table 4-B (continued)

Effects of controlling powdery mildew (Sphaerotheca fuliginea) on cucumber

| Test Compound | | Concentration of active ingredient(s) in the sprayed solution (ppm) | | Rate of application of active ingredient(s) (g/10 a) | | Time interval (days) between the first and second application | % Disease Control | | Phytotoxicity |
|---|---|---|---|---|---|---|---|---|---|
| At first application | At second application | At first application | At second application | At first application | At second application | | Resistant strain of S. fuliginea | Sensitive strain of S. fuliginea | |
| Plots for application of two different test compounds at different times (Tests according to this invention) | | | | | | | | | |
| Compound L | Compound No. 2 | 20<br>20<br>10 | 40<br>5<br>20 | 6<br>6<br>3 | 12<br>1.5<br>6 | 7<br>1<br>1 | 100<br>100<br>100 | 100<br>100<br>100 | Not observed<br>Not observed<br>Not observed |
| Compound L | Compound No. 3 | 20<br>20<br>10 | 40<br>5<br>20 | 6<br>6<br>3 | 12<br>1.5<br>6 | 7<br>1<br>1 | 100<br>100<br>100 | 100<br>100<br>100 | Not observed<br>Not observed<br>Not observed |
| Compound M | Compound No. 1 | 20<br>20<br>10 | 40<br>5<br>20 | 6<br>6<br>3 | 12<br>1.5<br>6 | 7<br>1<br>1 | 100<br>100<br>100 | 100<br>100<br>100 | Not observed<br>Not observed<br>Not observed |
| Compound M | Compound No. 2 | 20<br>20<br>10 | 40<br>5<br>20 | 6<br>6<br>3 | 12<br>1.5<br>6 | 7<br>1<br>1 | 100<br>100<br>100 | 100<br>100<br>100 | Not observed<br>Not observed<br>Not observed |
| Compound M | Compound No. 3 | 20<br>20<br>10 | 40<br>5<br>20 | 6<br>6<br>3 | 12<br>1.5<br>6 | 7<br>1<br>1 | 100<br>100<br>100 | 100<br>100<br>100 | Not observed<br>Not observed<br>Not observed |
| Compound N | Compound No. 1 | 100<br>100<br>50 | 40<br>5<br>20 | 30<br>30<br>15 | 12<br>1.5<br>6 | 7<br>1<br>1 | 99<br>100<br>100 | 100<br>100<br>100 | Not observed<br>Not observed<br>Not observed |
| Compound N | Compound No. 2 | 100<br>100<br>50 | 40<br>5<br>10 | 30<br>30<br>15 | 12<br>1.5<br>6 | 7<br>1<br>1 | 99<br>100<br>100 | 100<br>100<br>100 | Not observed<br>Not observed<br>Not observed |
| Compound N | Compound No. 3 | 100<br>100<br>50 | 40<br>5<br>20 | 30<br>30<br>15 | 12<br>1.5<br>6 | 7<br>1<br>1 | 98<br>100<br>100 | 100<br>100<br>100 | Not observed<br>Not observed<br>Not observed |

Table 4-B (continued)

Effects of controlling powdery mildew (Sphaerotheca fuliginea) on cucumber

| Test Compound | | Concentration of active ingredient(s) in the sprayed solution (ppm) | | Rate of application of active ingredient(s) (g/10 a) | | Time interval (days) between the first and second application | % Disease Control | | Phytotoxicity |
|---|---|---|---|---|---|---|---|---|---|
| At first application | At second application | At first application | At second application | At first application | At second application | | Resistant strain of S. fuliginea | Sensitive strain of S. fuliginea | |
| Plots for application of two different test compounds at different times (Tests according to this invention) | | | | | | | | | |
| Compound No. 1 | Compound A | 40<br>20 | 50<br>25 | 12<br>6 | 15<br>7.5 | 7<br>1 | 100<br>100 | 100<br>100 | Not observed<br>Not observed |
| Compound No. 1 | Compound B | 40<br>20 | 20<br>10 | 12<br>6 | 6<br>3 | 7<br>1 | 100<br>100 | 100<br>100 | Not observed<br>Not observed |
| Compound No. 1 | Compound C | 40<br>20 | 20<br>10 | 12<br>6 | 6<br>3 | 7<br>1 | 100<br>100 | 100<br>100 | Not observed<br>Not observed |
| Compound No. 1 | Compound E | 40<br>20 | 10<br>5 | 12<br>6 | 3<br>1.5 | 7<br>1 | 99<br>99 | 100<br>100 | Not observed<br>Not observed |
| Compound No. 1 | Compound G | 40<br>20 | 20<br>10 | 12<br>6 | 6<br>3 | 7<br>1 | 100<br>100 | 100<br>100 | Not observed<br>Not observed |
| Compound No. 1 | Compound H | 40<br>20 | 4<br>2 | 12<br>6 | 1.2<br>0.6 | 7<br>1 | 100<br>100 | 100<br>100 | Not observed<br>Not observed |
| Compound No. 1 | Compound I | 40<br>20 | 20<br>10 | 12<br>6 | 6<br>3 | 7<br>1 | 100<br>100 | 100<br>100 | Not observed<br>Not observed |
| Compound No. 1 | Compound J | 40<br>20 | 10<br>5 | 12<br>6 | 3<br>1.5 | 7<br>1 | 100<br>100 | 100<br>100 | Not observed<br>Not observed |
| Compound No. 1 | Compound K | 40<br>20 | 40<br>20 | 12<br>6 | 12<br>6 | 7<br>1 | 100<br>100 | 100<br>100 | Not observed<br>Not observed |
| Compound No. 1 | Compound L | 40<br>20 | 20<br>10 | 12<br>6 | 6<br>3 | 7<br>1 | 100<br>100 | 100<br>100 | Not observed<br>Not observed |

Table 4-B (continued)

Effects of controlling powdery mildew (Sphaerotheca fuliginea) on cucumber

| Test Compound | | Concentration of active ingredient(s) in the sprayed solution (ppm) | | Rate of application of active ingredient(s) (g/10 2) | | Time interval (days) between the first and second application | % Disease Control | | Phytotoxicity |
|---|---|---|---|---|---|---|---|---|---|
| At first application | At second application | At first application | At second application | At first application | At second application | | Resistant strain of S. fuliginea | Sentitive strain of S. fuliginea | |
| Plots for application of two different test compounds at different times (Tests according to this invention) | | | | | | | | | |
| Compound No. 1 | Compound M | 40<br>20 | 20<br>10 | 12<br>6 | 6<br>3 | 7<br>1 | 100<br>100 | 100<br>100 | Not observed<br>Not observed |
| Compound No. 1 | Compound N | 40<br>20 | 100<br>50 | 12<br>6 | 30<br>15 | 7<br>1 | 99<br>100 | 100<br>100 | Not observed<br>Not observed |
| Compound No. 2 | Compound A | 40<br>20 | 50<br>25 | 12<br>6 | 15<br>7.5 | 7<br>1 | 100<br>100 | 100<br>100 | Not observed<br>Not observed |
| Compound No. 2 | Compound B | 40<br>20 | 20<br>10 | 12<br>6 | 6<br>3 | 7<br>1 | 100<br>100 | 100<br>100 | Not observed<br>Not observed |
| Compound No. 2 | Compound C | 40<br>20 | 20<br>10 | 12<br>6 | 6<br>3 | 7<br>1 | 100<br>100 | 100<br>100 | Not observed<br>Not observed |
| Compound No. 2 | Compound E | 40<br>20 | 10<br>5 | 12<br>6 | 3<br>1.5 | 7<br>1 | 100<br>100 | 100<br>100 | Not observed<br>Not observed |
| Compound No. 2 | Compound G | 40<br>20 | 20<br>10 | 12<br>6 | 6<br>3 | 7<br>1 | 100<br>100 | 100<br>100 | Not observed<br>Not observed |
| Compound No. 2 | Compound H | 40<br>20 | 4<br>2 | 12<br>6 | 1.2<br>0.6 | 7<br>1 | 100<br>100 | 100<br>100 | Not observed<br>Not observed |
| Compound No. 2 | Compound I | 40<br>20 | 20<br>10 | 12<br>6 | 6<br>3 | 7<br>1 | 100<br>100 | 100<br>100 | Not observed<br>Not observed |
| Compound No. 2 | Compound J | 40<br>20 | 10<br>5 | 12<br>6 | 3<br>1.5 | 7<br>1 | 100<br>100 | 100<br>100 | Not observed<br>Not observed |

Table 4-B (continued)

Effects of controlling powdery mildew (Sphaerotheca fuliginea) on cucumber

| Test Compound | | Concentration of active ingredient(s) in the sprayed solution (ppm) | | Rate of application of active ingredient(s) (g/10 a) | | Time interval (days) between the first and second application | % Disease Control | | Phytotoxicity |
|---|---|---|---|---|---|---|---|---|---|
| At first application | At second application | At first application | At second application | At first application | At second application | | Resistant strain of S. fuliginea | Sensitive strain of S. fuliginea | |
| Plot for application of two different test compounds at different times (Tests according to this invention) | | | | | | | | | |
| Compound No. 2 | Compound K | 40<br>20 | 40<br>20 | 12<br>6 | 12<br>6 | 7<br>1 | 100<br>100 | 100<br>100 | Not observed<br>Not observed |
| Compound No. 2 | Compound L | 40<br>20 | 20<br>10 | 12<br>6 | 6<br>3 | 7<br>1 | 100<br>100 | 100<br>100 | Not observed<br>Not observed |
| Compound No. 2 | Compound M | 40<br>20 | 20<br>10 | 12<br>6 | 6<br>3 | 7<br>1 | 100<br>100 | 100<br>100 | Not observed<br>Not observed |
| Compound No. 2 | Compound N | 40<br>20 | 100<br>50 | 12<br>6 | 30<br>15 | 7<br>1 | 98<br>100 | 100<br>100 | Not observed<br>Not observed |
| Compound No.3 | Compound A | 40<br>20 | 50<br>25 | 12<br>6 | 15<br>7.5 | 7<br>1 | 100<br>100 | 100<br>100 | Not observed<br>Not observed |
| Compound No. 3 | Compound B | 40<br>20 | 20<br>10 | 12<br>6 | 6<br>3 | 7<br>1 | 100<br>100 | 100<br>100 | Not observed<br>Not observed |
| Compound No. 3 | Compound C | 40<br>20 | 20<br>10 | 12<br>6 | 6<br>3 | 7<br>1 | 100<br>100 | 100<br>100 | Not observed<br>Not observed |
| Compound No. 3 | Compound E | 40<br>20 | 10<br>5 | 12<br>6 | 3<br>1.5 | 7<br>1 | 100<br>100 | 100<br>100 | Not observed<br>Not observed |
| Compound No. 3 | Compound G | 40<br>20 | 20<br>10 | 12<br>6 | 6<br>3 | 7<br>1 | 100<br>100 | 100<br>100 | Not observed<br>Not observed |
| Compound No. 3 | Compound H | 40<br>20 | 4<br>2 | 12<br>6 | 1.2<br>0.6 | 7<br>1 | 100<br>100 | 100<br>100 | Not observed<br>Not observed |

Table 4-B (continued)

Effect of controlling powdery mildew (Sphaerotheca fuliginea) on cucumber

| Test Compound | | Concentration of active ingredient(s) in the sprayed solution (ppm) | | Rate of application of active ingredient(s) (g/10 a) | | Time interval (days) between the first and second application | % Disease Control | | Phytotoxocity |
|---|---|---|---|---|---|---|---|---|---|
| At first application | At second application | At first application | At second application | At first application | At second application | | Resistant strain of S. fuliginea | Sensitive strain of S. fuliginea | |
| Plots for application of two different test compounds at different times (Tests according to this invention) | | | | | | | | | |
| Compound No. 3 | Compound I | 40<br>20 | 20<br>10 | 12<br>6 | 6<br>3 | 7<br>1 | 100<br>100 | 100<br>100 | Not observed<br>Not observed |
| Compound No. 3 | Compound J | 40<br>20 | 10<br>5 | 12<br>6 | 3<br>1.5 | 7<br>1 | 100<br>100 | 100<br>100 | Not observed<br>Not observed |
| Compound No. 3 | Compound K | 40<br>20 | 40<br>20 | 12<br>6 | 12<br>6 | 7<br>1 | 100<br>100 | 100<br>100 | Not observed<br>Not observed |
| Compound No. 3 | Compound L | 40<br>20 | 20<br>10 | 12<br>6 | 6<br>3 | 7<br>1 | 100<br>100 | 100<br>100 | Not observed<br>Not observed |
| Compound No. 3 | Compound M | 40<br>20 | 20<br>10 | 12<br>6 | 6<br>3 | 7<br>1 | 100<br>100 | 100<br>100 | Not observed<br>Not observed |
| Compound No. 3 | Compound N | 40<br>20 | 100<br>50 | 12<br>6 | 30<br>15 | 7<br>1 | 98<br>100 | 100<br>100 | Not observed<br>Not observed |
| Chinomethionate (Referential) | Chiomethionate (Referential) | 100<br>25 | 100<br>25 | 30<br>7.5 | 30<br>7.5 | 7<br>1 | 91<br>50 | 96<br>56 | Not observed<br>Not observed |
| Untreated plots | | - | - | | | - | 0<br>(100) | 0<br>(100) | |

Notes for Table 4-B:-

1) "Chinomethionate" is the commercially available fungicidal agent as indicated in Test 1.

2) The numerical fiures given in the brackets in the above tables indicate the disease serverity in the untreatment.

Test 4

This test illustrates some tests for controlling cucumber powdery mildew caused by an EBI agent-resistant strain of cucumber powdery mildew fungus, with application of a synergistic composition containing two fungicidal compounds as mixed together immediately just before the application according to the second aspect of this invention.

Each of the test fungicidal compounds was formulated into wettable powders in a similar way to the above Example 10 given hereinbefofe. One wettable powder containing a single active fungicidal compound was dissolved in water containing 30 ppm of polyoxyethylene alkyl ethers so as to prepare different test solutions for spray which contained one test fungicidal compound at different concentrations as the single active ingredient. One the other hand, one wettable powder containing a first fungicidal compound as a single active ingredient and another wettable powder containing a second fungicidal compound as a single active ingredient were simultaneously dissolved in water containing 30 ppm of the polyoxyethylene alkyl ethers so as to prepare different test solutions for spray which contained the two different test fungicidal compounds at different concentrations as the associated active ingredients.

The test solution so prepared was applied by spraying onto the foliage of cucumber plants (variety: Sagami Hanjiro) at a stage of 2.1 to 2.2 leaves which were cultivated in pots, by means of an automatic sprayer, so as to give the rates of application of the active ingredients as indicated in Table 5 below. After the spraying of the test compound, the treated cucumber plants were stored in a room at a constant temperature of 20° C for 24 hours.

After this, the treated plants were inoculated with the Compound A-resistant strain of S. fuligenea or the Compound A-sensitive strain of S. fuliginea in the same manner as in the above Test 3, and the disease severity was estimated and the % disease control was evaluated in the same way as in the above Test 3.

The tests were conducted in three replicates using one pot per one plot for a given concentration of one test compound.

The test results obtained are tabulated in Table 5 below.

Table 5-A

Effects of controlling of powdery mildew (Sphaerotheca fuliginea) on cucumber

| Test Compound | Concentration of active ingredient(s) in the sprayed solution (ppm) | Rate of application of active ingredient(s) (g/10 a) | % Disease Control | | Phytotoxicity |
|---|---|---|---|---|---|
| | | | Resistant strain of S. fuliginea | Sensitive strain of S. fuliginea | |
| Plots for application of single test compound (Comparative tests) | | | | | |
| Compound A | 45<br>25 | 13.5<br>7.5 | 21<br>14 | 100<br>100 | Not observed<br>Not observed |
| Compound B | 30<br>10 | 9<br>3 | 33<br>18 | 100<br>100 | Not observed<br>Not observed |
| Compound C | 30<br>10 | 9<br>3 | 47<br>16 | 100<br>100 | Not observed<br>Not observed |
| Compound E | 25<br>5 | 7.5<br>1.5 | 62<br>27 | 100<br>100 | Stunt<br>Not observed |
| Compound G | 30<br>10 | 9<br>3 | 59<br>18 | 100<br>100 | Not observed<br>Not observed |
| Compound H | 22<br>2 | 6.6<br>0.6 | 74<br>24 | 100<br>100 | Greening of leaf<br>Not observed |
| Compound I | 30<br>10 | 9<br>3 | 69<br>11 | 100<br>100 | Not observed<br>Not observed |

Table 5-A (continued)

Effects of controlling of powdery mildew (Sphaerotheca fuliginea) on cucumber

| Test Compound | Concentration of active ingredient(s) in the sprayed solution (ppm) | Rate of application of active ingredient(s) (g/10 a) | % Disease Control | | Phytotoxicity |
|---|---|---|---|---|---|
| | | | Resistant strain of S. fuliginea | Sensitive strain of S. fuliginea | |
| Plots for application of single test compound (Comparative tests) | | | | | |
| Compound J | 25<br>5 | 7.5<br>1.5 | 71<br>26 | 100<br>100 | Not observed<br>Not observed |
| Compound K | 40<br>20 | 12<br>6 | 33<br>22 | 100<br>100 | Not observed<br>Not observed |
| Compound L | 20<br>10 | 6<br>3 | 20<br>11 | 100<br>100 | Not observed<br>Not observed |
| Compound M | 20<br>10 | 6<br>3 | 20<br>15 | 100<br>100 | Not observed<br>Not observed |
| Compound N | 100<br>50 | 30<br>15 | 40<br>14 | 100<br>98 | Not observed<br>Not observed |
| Compound No. 1 | 100<br>40<br>20 | 30<br>12<br>6 | 80<br>57<br>34 | 100<br>100<br>100 | Not observed<br>Not observed<br>Not observed |

Table 5-A (continued)

Effects of controlling of powdery mildew (Sphaerotheca fuliginea) on cucumber

| Test Compound | Concentation of active ingredient(s) in the sprayed solution (ppm) | Rate of application of active ingredient(s) (g/10 a) | % Disease Control | | Phytotoxicity |
|---|---|---|---|---|---|
| | | | Resistant strain of S. fuliginea | Sensitive strain of S. fuliginea | |
| Plots for application of single test compound (Comparative tests) | | | | | |
| Compound No. 2 | 100<br>40<br>20 | 30<br>12<br>6 | 78<br>54<br>29 | 100<br>100<br>100 | Not observed<br>Not observed<br>Not observed |
| Compound No. 3 | 100<br>40<br>20 | 30<br>12<br>6 | 79<br>51<br>31 | 100<br>100<br>100 | Not observed<br>Not observed<br>Not observed |

Table 5-B

Effects of controlling powdery mildew (Sphaerotheca fuliginea) on cucumber

| Test Compound | Concentration of active ingredient(s) in the sprayed solution (ppm) | Rate of application of active ingredient(s) (g/10 a) | % Disease Control | | Phyto-toxicity |
|---|---|---|---|---|---|
| | | | Resistant strain of S. fuliginea | Sensitive strain of S. fuliginea | |
| Plots for application of two different test compounds mixed just before the application (Tests according to this invention) | | | | | |
| Compound A + Compound No. 1 | 25 + 20 | 7.5 + 6 | 100 | 100 | Not observed |
| Compound A + Compound No. 2 | 25 + 20 | 7.5 + 6 | 100 | 100 | Not observed |
| Compound A + Compound No. 3 | 25 + 20 | 7.5 + 6 | 100 | 100 | Not observed |
| Compound B + Compound No. 1 | 10 + 20 | 3 + 6 | 100 | 100 | Not observed |
| Compound B + Compound No. 2 | 10 + 20 | 3 + 6 | 100 | 100 | Not observed |
| Compound B + Compound No. 3 | 10 + 20 | 3 + 6 | 100 | 100 | Not observed |
| Compound C + Compound No. 1 | 10 + 20 | 3 + 6 | 100 | 100 | Not observed |
| Compound C + Compound No. 2 | 10 + 20 | 3 + 6 | 100 | 100 | Not observed |
| Compound C + Compound No. 3 | 10 + 20 | 3 + 6 | 100 | 100 | Not observed |
| Compound E + Compound No. 1 | 5 + 20 | 1.5 + 6 | 100 | 100 | Not observed |
| Compound E + Compound No. 2 | 5 + 20 | 1.5 + 6 | 100 | 100 | Not observed |
| Compound E + Compound No. 3 | 5 + 20 | 1.5 + 6 | 100 | 100 | Not observed |

Table 5-B (Continued)

Effects of controlling powdery mildew (Sphaerotheca fuliginea) on cucumber

| Test Compound | Concentration of active ingredient(s) in the sprayed solution (ppm) | Rate of application of active ingredient(s) (g/10 a) | % Disease Control | | Phyto-toxicity |
|---|---|---|---|---|---|
| | | | Resistant strain of *S. fuliginea* | Sensitive strain of *S. fuliginea* | |
| Plots for application of two different test compounds mixed just before the application (Tests according to this invention) | | | | | |
| Compound G + Compound No. 1 | 10 + 20 | 3 + 6 | 100 | 100 | Not observed |
| Compound G + Compound No. 2 | 10 + 20 | 3 + 6 | 100 | 100 | Not observed |
| Compound G + Compound No. 3 | 10 + 20 | 3 + 6 | 100 | 100 | Not observed |
| Compound H + Compound No. 1 | 2 + 20 | 0.6 + 6 | 100 | 100 | Not observed |
| Compound H + Compound No. 2 | 2 + 20 | 0.6 + 6 | 100 | 100 | Not observed |
| Compound H + Compound No. 3 | 2 + 20 | 0.6 + 6 | 100 | 100 | Not observed |
| Compound I + Compound No. 1 | 10 + 20 | 3 + 6 | 100 | 100 | Not observed |
| Compound I + Compound No. 2 | 10 + 20 | 3 + 6 | 100 | 100 | Not observed |
| Compound I + Compound No. 3 | 10 + 20 | 3 + 6 | 100 | 100 | Not observed |
| Compound J + Compound No. 1 | 5 + 20 | 1.5 + 6 | 100 | 100 | Not observed |
| Compound J + Compound No. 2 | 5 + 20 | 1.5 + 6 | 100 | 100 | Not observed |
| Compound J + Compound No. 3 | 5 + 20 | 1.5 + 6 | 100 | 100 | Not observed |

Table 5-B (continued)

Effects of controlling powdery mildew (Sphaerotheca fuliginea) on cucumber

| Test Compound | Concentration of active ingredient(s) in the sprayed solution (ppm) | Rate of application of active ingredient(s) (g/10 a) | % Disease Control | | Phyto-toxicity |
|---|---|---|---|---|---|
| | | | Resistant strain of *S. fuliginea* | Sensitive strain of *S. fuliginea* | |
| Plots for application of two different test compounds mixed just before the application (Tests according to this invention) | | | | | |
| Compound K + Compound No. 1 | 20 + 20 | 6 + 6 | 100 | 100 | Not observed |
| Compound K + Compound No. 2 | 20 + 20 | 6 + 6 | 100 | 100 | Not observed |
| Compound K + Compound No. 3 | 20 + 20 | 6 + 6 | 100 | 100 | Not observed |
| Compound L + Compound No. 1 | 10 + 10 | 3 + 3 | 98 | 100 | Not observed |
| Compound L + Compound No. 2 | 10 + 10 | 3 + 3 | 97 | 100 | Not observed |
| Compound L + Compound No. 3 | 10 + 10 | 3 + 3 | 98 | 100 | Not observed |
| Compound M + Compound No. 1 | 10 + 10 | 3 + 3 | 98 | 100 | Not observed |
| Compound M + Compound No. 2 | 10 + 10 | 3 + 3 | 96 | 100 | Not observed |
| Compound M + Compound No. 3 | 10 + 10 | 3 + 3 | 96 | 100 | Not observed |
| Compound N + Compound No. 1 | 50 + 10 | 15 + 3 | 96 | 100 | Not observed |
| Compound N + Compound No. 2 | 50 + 10 | 15 + 3 | 95 | 100 | Not observed |
| Compound N + Compound No. 3 | 50 + 10 | 15 + 3 | 95 | 100 | Not observed |

Table 5-B (continued)

Effects of controlling powdery mildew (*Sphaerotheca fuliginea*) on cucumber

| Test Compound | Concentration of active ingredient(s) in the sprayed solution (ppm) | Rate of application of active ingredient(s) (g/10 a) | % Disease Control | | Phyto-toxicity |
|---|---|---|---|---|---|
| | | | Resistant strain of *S. fuliginea* | Sensitive strain of *S. fuliginea* | |
| Chinomethionate | 100 | 30 | 90 | 95 | Not observed |
| (Referential) | 25 | 7.5 | 48 | 55 | Not observed |
| Untreated plots | - | 0<br>0 | 0<br>(100) | 0<br>(100) | - |

Notes for Table 5-B:-

1) "Chinomethionate" is the commercially available fungicidal agent as indicated in Test 1.
2) The numerical figures given in the brackets in the above table indicate the disease severity in the untreatment.

**Claims**

1. A synergistic fungicidal composition of agricultural and horticultural utilities, comprising as the active ingredients a mixture of (a) a fungicidal triazole derivative represented by the general formula

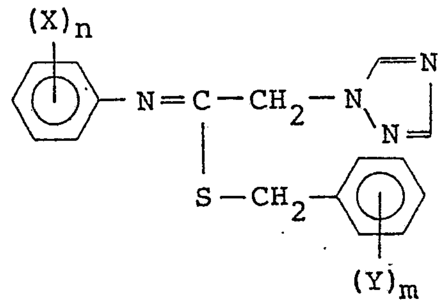

(I)

wherein X and Y are same or different and each denote a hydrogen atom or a halogen atom, and n and m are each an integer of 1 or 2, and (b) a second fungicidal compound selected from fungicidal triazole derivatives other than the triazole derivative of the formula (I), fungicidal imidazole derivatives, fungicidal morpholine derivatives and fungicidal piperazine derivatives.

2. The composition of Claim 1, in which (a) a fungicidal triazole derivative of the formula (I) as the first active ingredient and (b) a second fungicidal compound selected from the other fungicidal derivatives, the fungicidal imidazole derivatives, the fungicidal morpholine derivatives and the fungicidal piperazine derivatives as the second active ingredient are present at a ratio in a range of 1:0.05 to 1:20, preferably in a range of 1:0.25 to 1:5 by weight.

3. The composition of Claim 1 which comprises a fungicidally effective amount of a mixture of (a) a fungicidal triazole derivative of the formula (Ia)

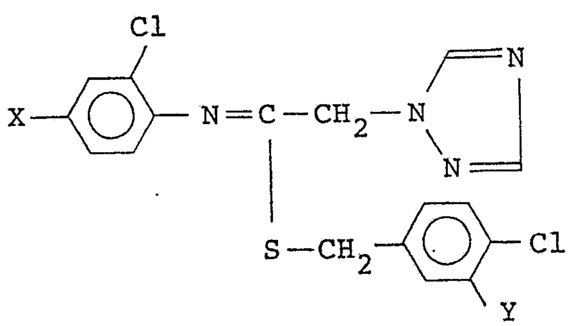

(Ia)

wherein X is a chlorine or fluorine atom and Y is a hydrogen atom or a chlorine atom as the first active ingredient, and (b) a second fungicidal compound selected from 1-(4-chlorophenoxy)-3,3-dimethyl-1-(1H-1,2,4-triazole-1-yl)-2-butanone, 1-(4-chlorophenoxy)-3,3-dimethyl-1-(1H-1,2,4-triazole-1-yl)butane-2-ol, all-rac-1-(biphenyl-4-yloxy)-3,3-dimethyl-1-(1H-1,2,4-triazole-1-yl)-butane-2-ol, (±)-1-{2-(2,4-dichlorophenyl)-4-ethyl-1,3-dioxolan-2-ylmethyl}-1H-1,2,4-triazole, (E)-1-(2,4-dichlorophenyl)-4,4-dimethyl-2-(1,2,4-triazole-1-yl)-1-pentene-3-ol, (±)-1-{2-(2,4-dichlorophenyl)-4-propyl-1,3-dioxolan-2-ylmethyl}-1H-1,2,4-triazole, 1-(2,4-dichloro-β-propylphenetyl)-1H-1,2,4-triazole, (RS)-2-(2,4-dichlorophenyl)-1-(1H-1,2,4-triazole-1-yl)-hexane-2-ol, allyl 1-(2,4-dichlorophenyl)-2-imidazole-1-ylethyl ether, (E)-4-chloro-α,α,α-trifluoro-N-(1-imidazole-1-yl-2-propoxy-ethylidine)-O-toluidine, N-propyl-N-{2-(2,4,6-trichlorophenoxy)ethyl} -imidazole-1-carboxyamide, 4-cyclododecyl-2,6-dimethylmorpholine acetate, 2,6-dimethyl-4-tridecylmorpholine, and 1,1′-piperazine-1,4-diyl-di-{N-(2,2,2-trichloroethyl) formamide}, as the second active ingredient, in association with a solid or liquid carrier for these active ingredients, and in which (a) the triazole derivative of the formula (Ia) and (b) the second fungicidal compound are present at a ratio in a range of 1:0.05 to 1:20, preferably in a range of 1:0.25 to 1:5 by weight.

4. The composition of Claim 1 or Claim 2 in which the fungicidal triazole derivative (a) of the formula (I) or the formula (Ia) is selected from 4-chlorobenzyl N-(2,4-dichlorophenyl)-2-(1,2,4-triazole-1-yl)-ethane-thioimidate;

3,4-dichlorobenzyl N-(2,4-dichlorophenyl)-2-(1,2,4-triazole-1-yl)-ethane-thioimidate; and 4-chlorobenzyl N-(2-chloro-4-fluorophenyl)-2-(1,2,4-triazole-1-yl)-ethane-thioimidate.

5. The composition of Claim 1 or Claim 2 in which the second fungicidal compound (b) selected as the second active ingredient is 1-(4-chlorophenoxy)-3,3-dimethyl-1-(1H-1,2,4-triazole-1-yl)-2-butanone.

6. A method for controlling a fungal disease on plants, which comprises mixing (a) a fungicidal triazole derivative represented by the general formula

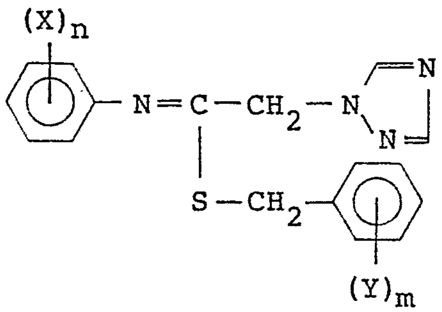

(I)

wherein X and Y are same or different and each denote a hydrogen atom or a halogen atom, and n and m are each an integer of 1 or 2, (b) with a second fungicidal compound selected from fungicidal triazole derivatives other than the fungicidal triazole derivative of the formula (I), fungicidal imidazole derivatives, fungicidal morpholine derivatives and fungicidal piperazine derivatives, and then immediately applying the resulting mixture to a plant which is infected with a phytopathogenic fungus of the fungal disease or is susceptible of being infected with said phytopathogenic fungus.

7. A method for controlling a fungal disease on plants, which comprises firstly applying (a) a fungicidal triazole derivative represented by the general formula

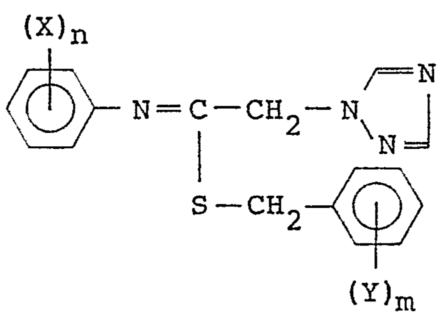

(I)

wherein X and Y are same or different and each denote a hydrogen atom or a halogen atom, and n and m are each an integer of 1 or 2, to a plant which is infected with a phytopathogenic fungus of the fungal disease or is susceptible of being infected with said phytopathogenic fungus, and then at a time interval of 1 day to 7 days from the first application of the triazole derivative of the formula (I), secondly applying to the once treated plant (b) a second fungicidal compound selected from the fungicidal triazole derivatives other than the triazole derivative of the formula (I), the fungicidal imidazole derivatives, the fungicidal morpholine derivatives and the fungicidal piperazine derivatives, optionally with the order of the application of the triazole derivative of the formula (I) and the application of the second fungicidal compound being reversed.

European Patent Office

# EUROPEAN SEARCH REPORT

Application Number

EP 88 40 2219

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 514 766 (HOKKO CHEMICAL INDUSTRY)<br>* Claims 11,12; page 20, lines 13-21 *<br>& US-A-4 512 989, & GB-A-2 109 371 (Cat. D)<br>----- | 1-7 | A 01 N 43/653<br>A 01 N 43/60<br>A 01 N 43/84 //<br>(A 01 N 43/653<br>A 01 N 43:653)<br>(A 01 N 43/60<br>A 01 N 43:653)<br>(A 01 N 43/84<br>A 01 N 43:653) |

TECHNICAL FIELDS SEARCHED (Int. Cl.4)

A 01 N

The present search report has been drawn up for all claims

| Place of search | Date of completion of the search | Examiner |
|---|---|---|
| THE HAGUE | 08-12-1988 | DECORTE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document